(19) **Europäisches Patentamt / European Patent Office / Office européen des brevets**

(11) **EP 1 954 030 B1**

(12) **EUROPEAN PATENT SPECIFICATION**

(45) Date of publication and mention
of the grant of the patent:
**28.11.2012 Bulletin 2012/48**

(21) Application number: **06798051.6**

(22) Date of filing: **15.09.2006**

(51) Int Cl.:
*G02B 13/18* (2006.01)　　*G02B 15/177* (2006.01)
*G06T 5/00* (2006.01)　　*G02B 13/00* (2006.01)
*G02B 7/36* (2006.01)　　*G06T 5/50* (2006.01)
*H04N 5/232* (2006.01)

(86) International application number:
**PCT/JP2006/318388**

(87) International publication number:
**WO 2007/046205 (26.04.2007 Gazette 2007/17)**

(54) **IMAGE PICKUP APPARATUS AND IMAGE PROCESSING METHOD**

BILDAUFNAHMEVORRICHTUNG UND BILDVERARBEITUNGSVERFAHREN

APPAREIL DE CAPTURE D'IMAGES ET PROCEDE DE TRAITEMENT D'IMAGES

(84) Designated Contracting States:
**DE GB IT**

(30) Priority: **18.10.2005 JP 2005303131**
**21.02.2006 JP 2006043657**
**23.06.2006 JP 2006173507**

(43) Date of publication of application:
**06.08.2008 Bulletin 2008/32**

(73) Proprietor: **Kyocera Corporation**
**Kyoto-shi**
**Kyoto 612-8501 (JP)**

(72) Inventors:
• **HATORI, Toshiki**
**Tokyo 158-8610 (JP)**
• **HAYASHI, Yuusuke**
**Tokyo 158-8610 (JP)**
• **SATOU, Masayuki**
**Tokyo 1588610 (JP)**
• **YOSHIKAWA, Seiji**
**Tokyo 158-8610 (JP)**

(74) Representative: **Melzer, Wolfgang et al**
**Mitscherlich & Partner**
**Patent- und Rechtsanwälte**
**Postfach 33 06 09**
**80066 München (DE)**

(56) References cited:
WO-A1-2005/069216　　JP-A- 11 500 235
JP-A- 2000 005 127　　JP-A- 2000 275 582
JP-A- 2002 369 071　　JP-A- 2003 235 794
JP-A- 2004 328 506　　US-A- 5 193 124
US-A1- 2003 127 584　　US-A1- 2004 190 762
US-B2- 6 525 302

• **RAMKUMAR NARAYANSWAMY ET AL:
"Extended depth-of-field iris recognition system
for a workstation environment" PROCEEDINGS
OF THE INTERNATIONAL SOCIETY FOR
OPTICAL ENGINEERING (SPIE), SPIE, USA, vol.
5779, 1 January 2005 (2005-01-01), pages 41-50,
XP007902707 ISSN: 0277-786X DOI:
10.1117/12.603612**
• **Stern, A. and Kopeika, N.S.: "analytical method
to calculate optical transfer functions for image
motion and vibrations using moments"[Online]
vol. 14, no. 2, 1 February 1997 (1997-02-01), pages
388-396, XP002606312 DOI: 10.1364/JOSAA.
14.000388 J. Opt. Soc. Am. A Retrieved from the
Internet: URL:http://www.opticsinfobase.org/
view_art icle.cfm?
gotourl=http%3A%2F%2Fwww.opticsin
fobase.org%2FDirectPDFAccess%2F0D94DB3B
-E9 7E-9BE9-1E979793F09CD3AC_
1702.pdf%3Fda%3D1
%26id%3D1702%26seq%3D0%26mobile%3Dno
&org=O
ffice%20Europeen%20des%20Brevets%20
(aka%20 European%20Patent%20Office)>
[retrieved on 2010-10-21]**

EP 1 954 030 B1

**Description**

TECHNICAL FIELD

The present invention relates to a digital still camera, a camera mounted in a mobile phone, a camera mounted in a personal digital assistant, an image inspection system, an industrial camera for automatic control, or another imaging apparatus using an imaging element and provided with an optical system and to an image processing method.

BACKGROUND ART

In recent years, rapid advances have been made in digitalization of information. This has led to remarkable efforts to meet with this in the imaging field. In particular, as symbolized by digital cameras, imaging surfaces are changing from the conventional film to solid-state imaging elements such as CCDs (charge coupled devices) or CMOS (complementary metal oxide semiconductor) sensors in the majority of cases.

An imaging lens device using a CCD or CMOS sensor for the imaging element in this way optically captures the image of an object by the optical system and extracts the image as an electric signal by the imaging element. Other than a digital still camera, this is used in a video camera, a digital video unit, a personal computer, a mobile phone, a personal digital assistant (PDA), an image inspection system, an industrial camera for automatic control, and so on.

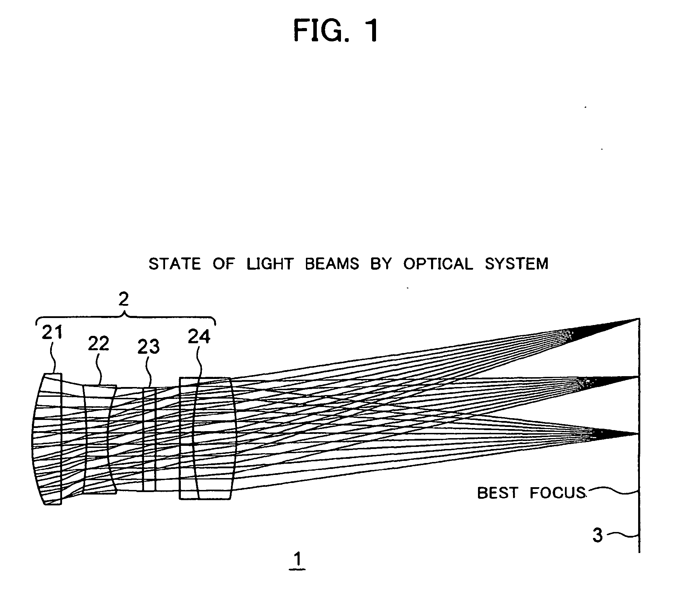

FIG. 1 is a diagram schematically showing the configuration of a general imaging lens device and a state of light beams.
This imaging lens device 1 has an optical system 2 and a CCD or CMOS sensor or other imaging element 3.
The optical system includes object side lenses 21 and 22, a stop 23, and an imaging lens 24 sequentially arranged from the object side (OBJS) toward the imaging element 3 side.

In the imaging lens device 1, as shown in FIG. 1, the best focus plane is made to match with the imaging element surface.

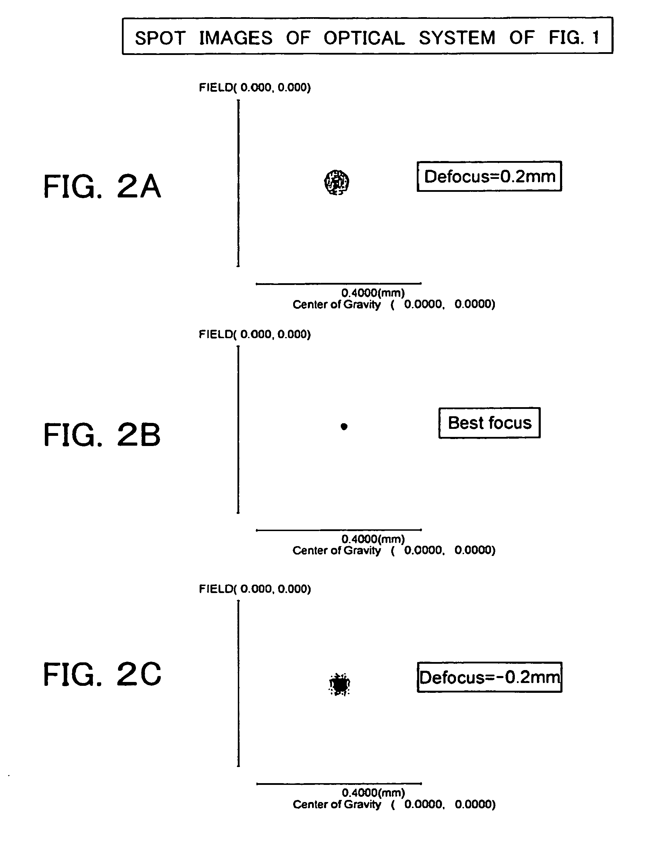

FIG. 2A to FIG. 2C show spot images on a light receiving surface of the imaging element 3 of the imaging lens device 1.

Further, imaging devices using phase plates (wavefront coding optical elements) to regularly diffuse the light beams, using digital processing to restore the image, and thereby enabling capture of an image having a deep depth of field and so on have been proposed (see for example Non-patent Documents 1 and 2 and Patent Documents 1 to 5).

Further, when capturing an image by a camera, for example, the imaging technique of setting the stop to the open side and focusing on an object while making the depth of the object shallow so as to intentionally blur parts other than the main object is known.

Further, to obtain an image blurred only at the background without being constrained by the distance relationship between the object and the background, the imaging technique of capturing the image at a plurality of focus positions and combining the images is known. Further, an automatic exposure control system of a digital camera performing filter processing using a transfer function has been proposed (see for example Patent Document 6).

Non-patent Document 1: "Wavefront Coding; jointly optimized optical and digital imaging systems", Edward R. Dowski, Jr., Robert H. Cormack, Scott D. Sarama.
Non-patent Document 2: "Wavefront Coding; A modern method of achieving high performance and/or low cost imaging systems", Edward R. Dowski, Jr., Gregory E. Johnson.
Patent Document 1: USP6,021,005
Patent Document 2: USP6,642,504
Patent Document 3: USP6,525,302
Patent Document 4: USP6,069,738
Patent Document 5: Japanese Patent Publication (A) No. 2003-235794
Patent Document 6: Japanese Patent Publication (A) No. 2004-153497

An imaging apparatus, in which all features of the precharacterizing part of claim 1 are disclosed, is described in US 6 525 302 B2.

DISCLOSURE OF THE INVENTION

PROBLEM TO BE SOLVED BY THE INVENTION

All of the imaging apparatuses proposed in the documents explained above are predicated on a PSF (Point Spread Function) being constant when inserting the above phase plate in the usual optical system. If the PSF changes, it is extremely difficult to realize an image having a deep depth of field by convolution using the subsequent kernels.

Accordingly, leaving aside lenses with single focal points, in lenses of the zoom system, AF system, etc., the high level of precision of the optical design and the accompanying increase in costs cause a major problem in their use.

In other words, in a conventional imaging apparatuses, suitable convolution processing is not possible. An optical design eliminating astigmatism, coma aberration, zoom chromatic aberration, and other aberration causing deviation of the spot image at the time of the "wide" mode and at the time of the "tele" mode is required.

However, an optical design eliminating these aberrations increases the difficulty of the optical design and induces problems such as an increase of the amount of design work, an increase of the costs, and an increase in size of the lenses.

Further, in the imaging technique of capturing images at a plurality of focus positions and combining these in order to obtain an image blurred in only the background explained before, since the focus position is changed and the image captured a plurality number of times, there is the problem that a long time is taken until all of the images finish being captured. Further, in this imaging technique, there is the problem that the main object and an object located in the background move and change during the plurality of imaging operations and therefore the combined image ends up becoming unnatural.

Further, in the apparatuses disclosed in the documents explained above, in for example capturing an image in a dark place, when restoring the image by signal processing, noise is simultaneously amplified as well.

Accordingly, in an optical system including an optical system and signal processing for example using the phase plate or other optical wavefront modulation element as explained above and the signal processing after that, there is the disadvantage that noise is amplified when capturing an image in a dark place and ends up having an influence upon the restored image.

An object of the present invention is to provide an imaging apparatus and an image processing method able to simplify the optical system, able to reduce the costs, able to obtain an image blurred only in the background or a focused image from a single imaging operation, and able to obtain a restored image with little influence of noise.

MEANS FOR SOLVING THE PROBLEM

The object of the present invention is achieved by an imaging apparatus and an image processing method according to the enclosed independent claims. Advantageous features of the present invention are defined in the corresponding subclaims.

EFFECT OF THE INVENTION

According to the present invention, there are the advantages that the optical system can be simplified, the costs can be reduced, and in addition an image blurred only in the desired region or a restored image (that is, a focused image) having little influence of noise and further a combined image of those can be obtained by a single imaging operation.

BRIEF DESCRIPTION OF THE DRAWINGS

[FIG. 1] FIG. 1 is a diagram schematically showing the configuration of a general imaging lens device and a state of light beams.
[FIGS. 2] FIG. 2A to FIG. 2C are diagrams showing spot images on a light receiving surface of an imaging element of the imaging lens device of FIG. 1, in which FIG. 2A is a diagram showing a spot image in a case where a focal point is deviated by 0.2 mm (defocus = 0.2 mm), FIG. 2B is a diagram showing a spot image in a case of focus (best focus), and FIG. 2C is a diagram showing a spot image in a case where the focal point is deviated by -0.2 mm (defocus = -0.2 mm).
[FIG. 3] FIG. 3 is a block diagram of the configuration showing an imaging apparatus according to the present invention.
[FIG. 4] FIG. 4 is a diagram showing an example of the configuration of an operation portion according to the present embodiment.
[FIG. 5] FIG. 5 is a diagram showing an example of performing restoration processing for only a halftone screening portion of an object portion and preparing a portrait image.
[FIG. 6] FIG. 6 is a diagram showing a center region at the time of a horizontal imaging portrait mode.
[FIG. 7] FIG. 7 is a diagram showing a center region at the time of a vertical imaging portrait mode.
[FIG. 8] FIG. 8 is a diagram showing a situation where a user selects an object during a display of a preview image and an example of determination by the user of the size and position of a frame indicating the center region by the operation portion (key input portion).
[FIG. 9] FIG. 9 is a diagram showing regions for changing a filter when changing filters from the center object toward the outside to enhance blurring.
[FIG. 10] FIG. 10 is a flow chart of the case of processing for restoration of a center region of an image.
[FIG. 11] FIG. 11 is a flow chart of the case of processing for restoration of a selected region.
[FIGS. 12] FIG. 12A to FIG. 12E are diagrams showing states of designating the range of a focused image or a blurred image and displays by that.
[FIGS. 13] FIG. 13A and FIG. 13B are diagrams showing a routine for designating the range of a focused image or a blurred image.
[FIGS. 14] FIG. 14A to FIG. 14D are diagrams showing a routine up until designating and displaying the range of a focused image or a blurred image.
[FIG. 15] FIG. 15 is a diagram schematically showing an example of the configuration of a zoom optical system on a wide angle side of the imaging lens device according to the present embodiment.
[FIG. 16] FIG. 16 is a diagram for explaining a principle of a wavefront aberration control optical system.
[FIG. 17] FIG. 17 is a diagram schematically showing an example of the configuration of a zoom optical system on a telescopic side of the imaging lens device according to the present embodiment.
[FIG. 18] FIG. 18 is a diagram showing a spot shape of the center of an image height on the wide angle side.

[FIG. 19] FIG. 19 is a diagram showing a spot shape of the center of an image height on the telescopic side.

[FIG. 20] FIG. 20 is a diagram showing an example of storage data of a kernel data ROM.

[FIG. 21] FIG. 21 is a flow chart schematically showing processing for setting an optical system of an exposure control device.

[FIG. 22] FIG. 22 is a diagram showing a first example of the configuration for a signal processing portion and kernel data storage ROM.

[FIG. 23] FIG. 23 is a diagram showing a second example of the configuration for a signal processing portion and kernel data storage ROM.

[FIG. 24] FIG. 24 is a diagram showing a third example of the configuration for a signal processing portion and kernel data storage ROM.

[FIG. 25] FIG. 25 is a diagram showing a fourth example of the configuration for a signal processing portion and kernel data storage ROM.

[FIG. 26] FIG. 26 is a diagram showing an example of the configuration of an image processing device combining object distance information and exposure information.

[FIG. 27] FIG. 27 is a diagram showing an example of the configuration of an image processing device combining zoom information and exposure information.

[FIG. 28] FIG. 28 is a diagram showing an example of the configuration of a filter in a case where use is made of the exposure information, object distance information, and zoom information.

[FIG. 29] FIG. 29 is a diagram showing an example of the configuration of an image processing device combining imaging mode information and exposure information.

[FIGS. 30] FIG. 30A to FIG. 30C are diagrams showing spot images on the light receiving surface of an imaging element according to the present embodiment, in which FIG. 30A is a diagram showing a spot image in the case where the focal point is deviated by 0.2 mm (defocus = 0.2 mm), FIG. 30B is a diagram showing a spot image in the case of focus (best focus), and FIG. 30C is a diagram showing a spot image in the case where the focal point is deviated by -0.2 mm (defocus = -0.2 mm).

[FIGS. 31] FIG. 31A and FIG. 31B are diagrams for explaining an MTF of a first-order image formed by an imaging element according to the present embodiment, in which FIG. 31A is a diagram showing a spot image on the light receiving surface of an imaging lens device, and FIG. 31B shows an MTF characteristic with respect to a spatial frequency.

[FIG. 32] FIG. 32 is a diagram for explaining MTF correction processing in an image processing device according to the present embodiment.

[FIG. 33] FIG. 33 is a diagram for concretely explaining MTF correction processing in an image processing device according to the present embodiment.

[FIG. 34] FIG. 34 is a diagram showing responses of MTF at a time when an object is located at a focal point position and a time when it is out of the focal point position in the case of the general optical system.

[FIG. 35] FIG. 35 is a diagram showing responses of MTF at the time when an object is located at a focal point position and at the time when it is out of the focal point position in a case of the optical system of the present embodiment having an optical wavefront modulation element.

[FIG. 36] FIG. 36 is a diagram showing the response of MTF after data restoration of an imaging apparatus according to the present embodiment.

[FIG. 37] FIG. 37 is a block diagram of the configuration showing an embodiment of an imaging apparatus having a plurality of optical systems according to the present invention.

[FIG. 38] FIG. 38 is a flow chart schematically showing processing for setting an optical system of a system control device of FIG. 37.

DESCRIPTION OF NOTATIONS

100, 100A... imaging apparatuses, 110... optical system, 110A... optical unit, 120... imaging element, 130... analog front end portion (AFE), 140... image processing device, 150... camera signal processing portion, 180... operation portion, 190... exposure control device, 200... system control device, 201... optical system switch control portion, 111... object side lens, 112... focus lens, 113... wavefront forming optical element, 113a... phase plate (optical wavefront modulation element), 142... convolution processor, 143... kernel data ROM, and 144... convolution control portion.

BEST MODE FOR CARRYING OUT THE INVENTION

Below, embodiments of the present invention will be explained with reference to the accompanying drawings.

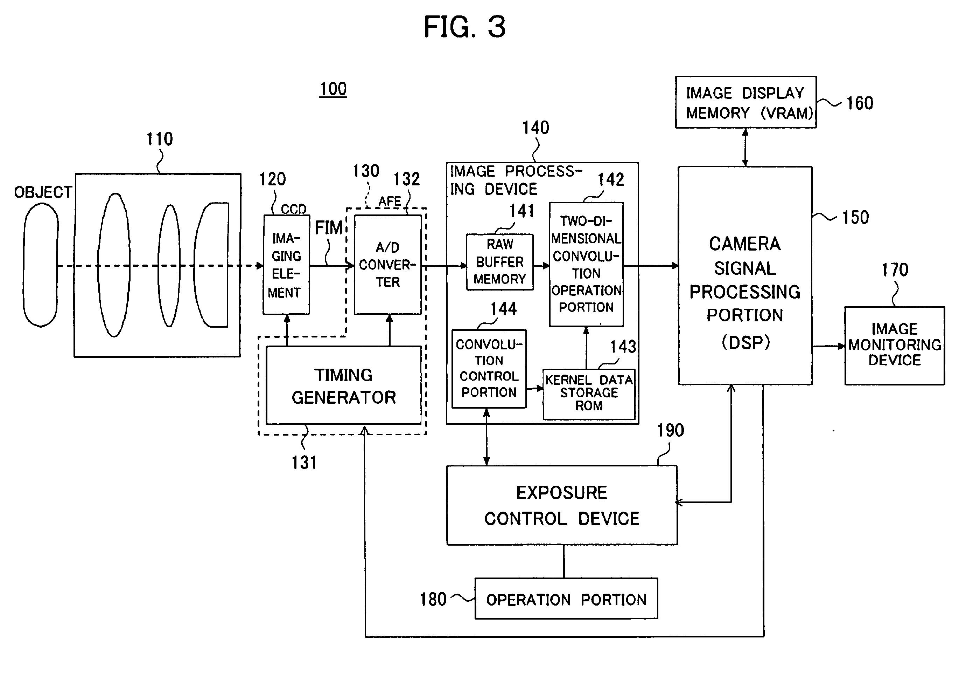

FIG. 3 is a block diagram of the configuration showing an embodiment of an imaging apparatus according to the present invention.

An imaging apparatus 100 according to the present embodiment has an optical system 110, imaging element 120, analog front end portion (AFE) 130, image processing device 140, camera signal processing portion 150, image display memory 160, image monitoring device 170, operation portion 180, and exposure control device 190.

The optical system 110 supplies an image obtained by capturing an image of an object OBJ to the imaging element 120.

The optical system 110 of the present embodiment includes an optical wavefront modulation element as will be explained in detail later.

The imaging element 120 is formed by a CCD or CMOS sensor at which the image captured at the optical system 110 including the optical wavefront modulation element is focused and which outputs focused first-order image information as a first-order image signal FIM of an electric signal to the image processing device 140 via the analog front end portion 130.

In FIG. 1, the imaging element 120 is described as a CCD as an example.

The analog front end portion (hereinafter referred to as an "AFE") 130 has a timing generator 131 and an analog/digital (A/D) converter 132.

The timing generator 131 generates a drive timing of the CCD of the imaging element 120, while the A/D converter 132 converts an analog signal input from the CCD to a digital signal and outputs the same to the image processing device 140.

The image processing device (two-dimensional convolution means) 140 forming a portion of the signal processing portion receives as input the digital signal of the captured image coming from the AFE 130 in a front stage, applies two-dimensional convolution processing to this, and transfers the same to the camera signal processing portion (DSP) 150 in a latter stage.

The image processing device 140 performs filter processing on the optical transfer function (OTF) in accordance with the exposure information of the exposure control device 190.

The image processing device 140 has a function of generating a diffusion-free image signal from a diffused image signal of the object from the imaging element 120. Further, the signal processing portion has a function of applying noise reduction filtering in the first step.

The processing of the image processing device 140 will be explained in further detail later.

The camera signal processing portion (DSP) 150 performs color interpolation, white balancing, YCbCr conversion processing, compression, filtering, and other processing and performs storage of data into the memory 160, an image display in the image monitoring device 170, and so on.

The exposure control device 190 performs the exposure control and, at the same time, waits for operation inputs of the operation portion 180 etc., determines the operation of the system as a whole in accordance with those inputs, controls the AFE 130, image processing device 140, DSP 150, etc., and conducts mediation control of the system as a whole.

The imaging apparatus 100 of the present embodiment has a plurality of imaging modes, for example, a macro imaging mode (proximate) and a distant view imaging mode (infinitely distant) other than the portrait mode and is configured so that these imaging modes can be selected and input by the operation portion 180.

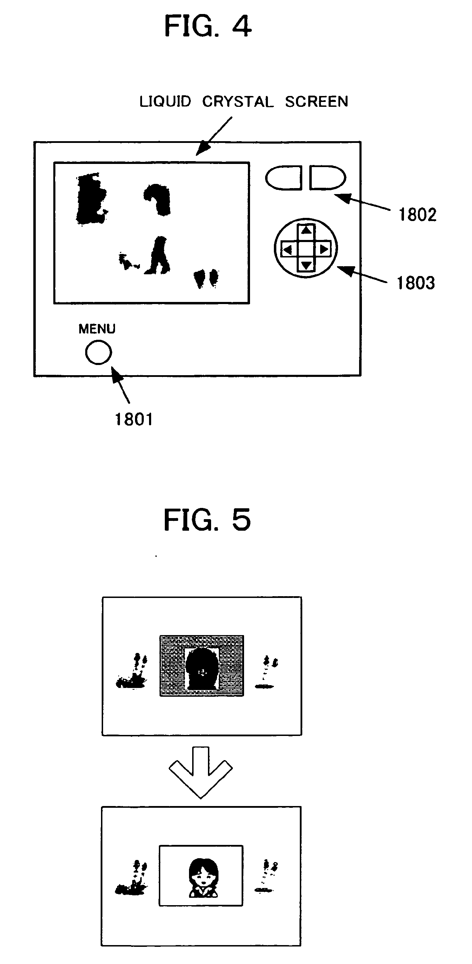

The operation portion 180 is, for example as shown in FIG. 4, configured by a MENU button 1801, a zoom button 1802, and a cross key 1803 which are arranged in the vicinity of a liquid crystal screen 1701 of the image monitoring device 170 on a back surface side of the camera (imaging apparatus) 100.

Note that the portrait mode is one of imaging modes set in accordance with the object at the time of the normal imaging and is an imaging mode suitable for capturing the image of a person. It makes the image of the background a blurred image by focusing on a person at the center. As other settable modes, there are a sports mode, sunset mode, night view mode, black-and-white mode, sepia mode, and so on.

Each mode can be selected and set by the MENU button 1801 and cross key 1803. In the present embodiment, the apparatus is configured so that a horizontal imaging use portrait and vertical imaging use portrait can be selected as the portrait mode. Note that the modes may be switched by a touch panel method on the liquid crystal screen 1701.

The imaging apparatus 100 in the present embodiment has the following function for making the portrait imaging easier.

Namely, the signal processing portion formed by the image processing device 140, DSP 150, and exposure control device 190 has a generation function of performing predetermined signal processing with respect to the diffused image signal, for example, generation of a diffusion-free image signal from a diffused image signal of the object from the imaging element 120, and combining the image before the processing of this signal processing portion and the image after the processing to form a new image.

This generation function generates a plurality of images by blurred image processing in the background region and combines a focused image of an object region including a main object after the processing to generate a new image.

Further, provision is made of a recording function of recording images before the signal processing in the signal processing portions (image processing device, DSP) 140, 150, etc., restored images after the processing, and combined new images in for example a not shown memory buffer or image display memory 160.

Since this recording function is provided, the present imaging apparatus 100 has the effect that portrait imaging by providing a generation function can be easily carried out. In addition, it can give the following effect.

Namely, by recording the image before the signal processing and the image after the signal processing, it is possible to select the position and size of an area desired to be made clear (conversely, an area desired to be made blurred) after the imaging and recording and prepare a new image.

For this reason, a portrait captured image can be prepared from an image which was captured and recorded in a mode other than the portrait mode at the time of imaging.

The signal processing portion of the imaging apparatus 100 having such a function extracts a focused image of the object region including the main object from the image after the image restoration processing and extracts an unfocused image of the background region contacting the object region from the image before the image restoration processing. It combines these extracted focused image of the object region and unfocused image of the background region to thereby generate a new image. Then, it records the generated image.

Further, in the present embodiment, the operation portion 180 functions as a designation portion for making the user designate the object region as well.

Below, first to third examples of processing for preparation of a portrait image according to the present embodiment will be explained with reference to FIG. 5 to FIG. 11.

FIG. 5 is a diagram showing an example of restoration processing for only the halftone screening portion of an object portion and preparing a portrait image.

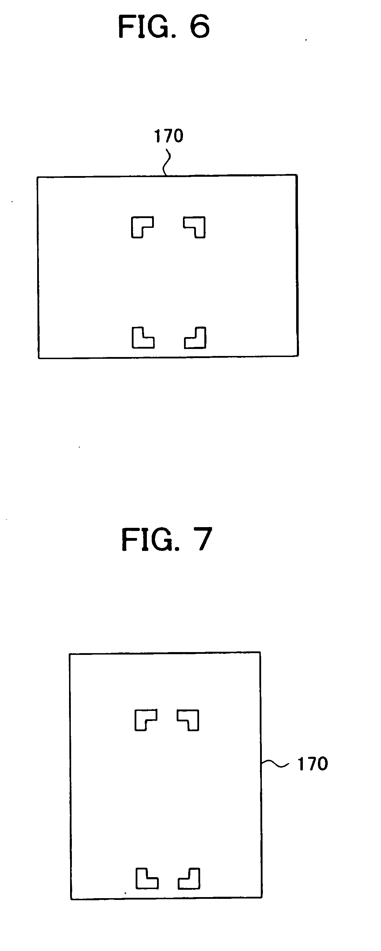

FIG. 6 is a diagram showing a center region at the time of a horizontal imaging portrait mode.

FIG. 7 is a diagram showing a center region at the time of a vertical imaging portrait mode.

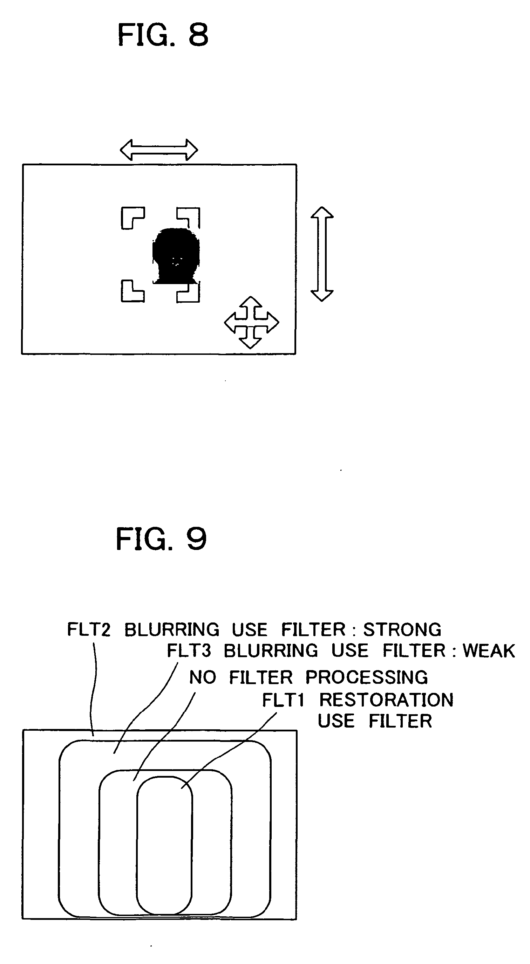

FIG. 8 is a diagram showing a situation where the user selects an object during a display of a preview image and an example of determining the size and position of a frame showing the center region by the operation portion (key input portion) by the user.

FIG. 9 is a diagram showing regions for changing a filter when changing filters from the center object toward the outside to enhance blurring.

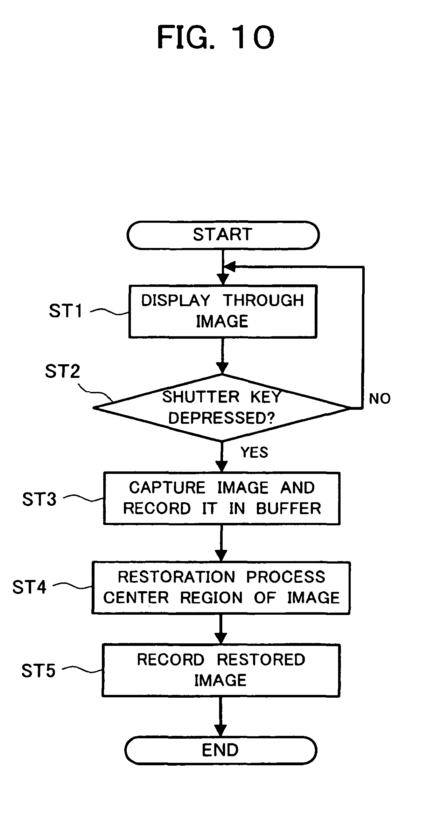

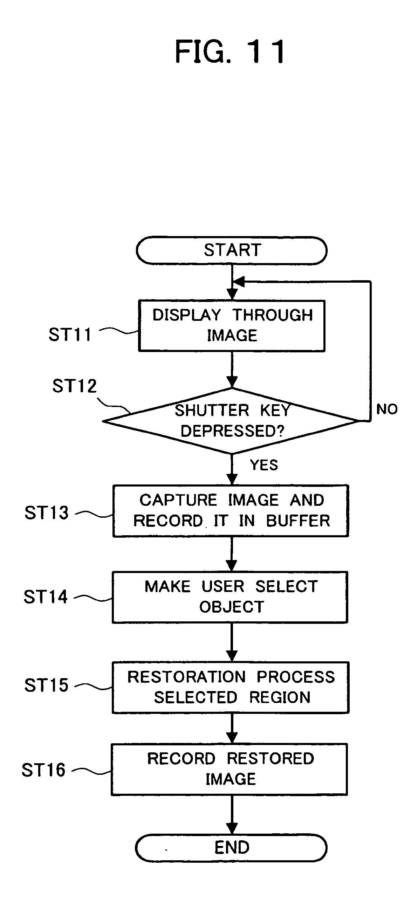

Further, FIG. 10 is a flow chart of the case of processing for restoration of a center region of an image, while FIG. 11 is a flow chart of the case of processing for restoration of a selected region.

<First Example>

The analog signal obtained by the imaging element 120 is digitalized at the AFE 130, is digitally processed in the image processing portion 140, becomes the Y, Cb, and Cr signals at the DSP 150, and is displayed as a through image in the image monitoring device 170 serving as the display portion.

When the operation portion 180 is used to select the vertical imaging portrait mode or horizontal imaging portrait mode, as shown in FIG. 6 or FIG. 7, a frame for vertical imaging or horizontal imaging is displayed in the center portion of the captured image, and the user takes a photo by matching the person with the inside of that frame.

Then, as shown in FIG. 5, image processing is carried out for only the interior of the frame and processing is performed for restoration of the halftone screening portion of the object portion, whereby a portrait image can be prepared.

Note that whether to set vertical imaging or horizontal imaging may be automatically detected by using an angular velocity sensor.

If explaining this processing operation with reference to FIG. 10, when the vertical imaging use portrait mode or horizontal imaging use portrait mode is set, the imaging apparatus 100 starts the imaging operation by the imaging element 120 and makes the image monitoring device 170 serving as the display portion display a preview image (ST1).

Then, when the user depresses a shutter key during the preview image display (ST2), the image is recorded in the RAM of the buffer (ST3), the image is restored for only the center region set in advance (ST4), and the recording processing is carried out (ST5).

<Second Example>

In this case, after completion of imaging, in the preview image, as shown in FIG. 8, the user selects the object and image processes that portion, whereby the portrait image can be prepared.

If explaining this processing operation with reference to FIG. 11, when the vertical imaging use portrait mode or horizontal imaging use portrait mode is set, the imaging apparatus 100 starts the imaging operation by the imaging element 120 and makes the image monitoring device 170 serving as the display portion display the preview image (ST11).

Then, when the user depresses the shutter key during the display of the preview image (ST12), the image is recorded in the RAM of the buffer (ST13), the preview image is displayed, and the user selects the object by the operation portion 180 (ST14).

Then, processing is performed for restoring the image of the selected region portion (ST15), and processing is preformed for recording the restored image (ST16).

<Third Example>

For the purpose of blurring the background image more, as shown in FIG. 9, filters FLT2, FLT3... for greater blurring of the image are prepared other than the filter FLT1 for restoring the image. These are switched according to the region of the photographed image, whereby an image more blurred in the background can be prepared.

As the extent of blurring at this time, the operation portion 180 of the first example is operated to select the vertical imaging portrait mode or horizontal imaging portrait mode. At this time, the user is made select this extent of blurring and perform more filter processing for blurring (image processing) the farther from the frame at the center portion.

In this example, the filters are formed so that the degree of blurring becomes stronger in the filter FLT2 than the filter FLT3.

Note that, as the blurring filters FLT2 and FLT3, general smoothing filters may be used as well.

In this way, the imaging apparatus 100 of the present embodiment can easily perform portrait imaging. By recording the image before the signal processing and the image after the signal processing, it is possible to select the position and size of an area desired to be made clear (conversely, an area desired to be blurred) after the imaging and recording to prepare a new image. For this reason, this apparatus has the advantage that a portrait captured image can be prepared from an image captured and recorded in a mode other than the portrait mode at the time of imaging.

Here, a specific example of the feature of the present invention, that is, generating a focused image in the set range or out of the set range on the liquid crystal screen 1701 by the operation portion 180, combining this with a blurred image, and thereby generating a new image will be explained.

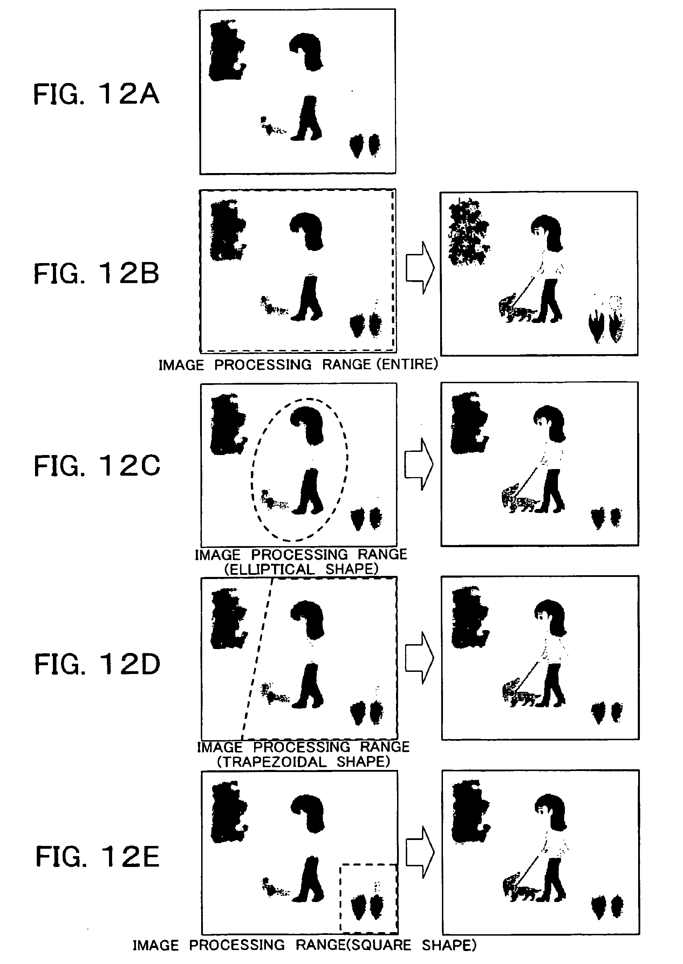

FIG. 12A to FIG. 12E are diagrams showing states where captured and recorded images are displayed on the liquid crystal screen 1701.

FIG. 12A is a diagram showing a state where an image (blurred image) before signal processing is displayed.

The left side of FIG. 12B is a diagram showing a state where the entire region is designated by halftone screening as the image (focused image) range after signal processing by the operation of the operation portion 180, while the right side is a diagram showing a state where the focused image is displayed in the entire region by the designation.

The present invention is characterized in that the size and position of the range of the focused image can be freely changed by the operation portion 180. The left side of FIG. 12C is a diagram showing a state where only the vicinity of the person at the center is designated as the focused image range by the operation portion 180, while the right side is a diagram showing a state where only the vicinity of the person is determined as the focused image by the present designation and the periphery is displayed as a blurred image. Note that the shape of the focused image range should be made selectable by the operation portion 180 as well and for example may be a trapezoidal shape or square shape as shown in FIG. 12D.

Further, the left side of FIG. 12E is a diagram showing a state where the right bottom portion is designated as the blurred image range by the operation portion 180, while the right side is a diagram showing a state where only the right bottom portion (vicinity of a flower) is determined as the blurred image by the designation and the other portion is displayed as the focused image.

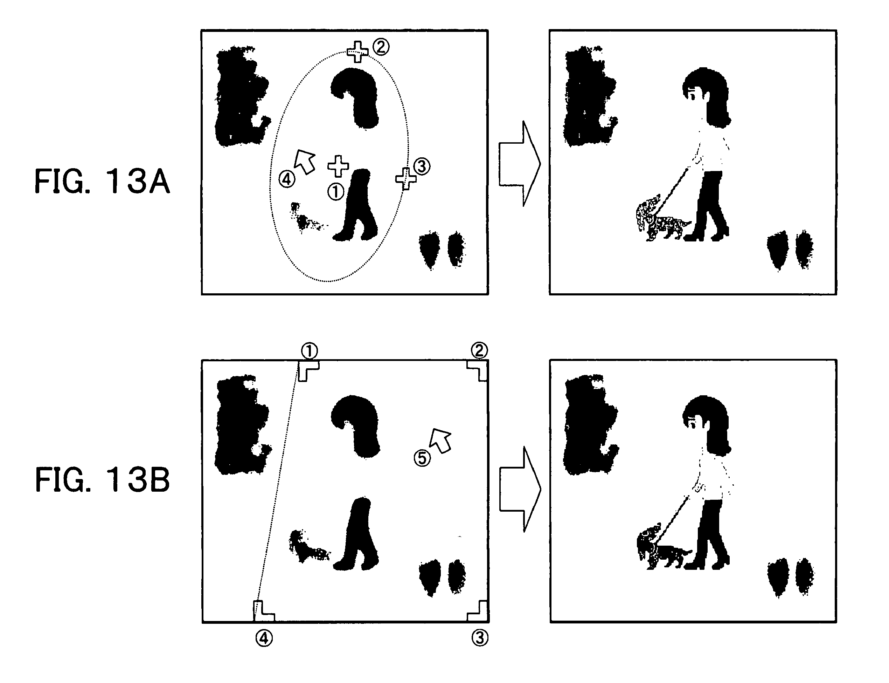

Here, a concrete method for designating the range will be explained with reference to the drawings. FIG. 13A and FIG. 13B are diagrams showing a display state of the liquid crystal screen 1701.

For example, a cursor (cross mark) on the liquid crystal screen 1701 may be moved by the cross key 1803 to designate the center and radius to determine a circular shape, three points may be designated to determine a circular shape, or the center and two radii may be designated to determine an elliptical shape as shown in FIG. 13A.

Further, the corners of the shape may be designated to determine a polygonal shape. Further, in a case of dividing the screen into two, it is possible to designate two points to determine division by 2. For example, as shown in FIG. 13B, it is sufficient to designate four points corresponding to the corners to determine a trapezoidal shape. Here, the arrows shown in FIG. 13A and FIG. 13B indicate the selection by the cross key 1803 of whether the interior of the designated range is to be determined as the blurred image or focused image and/or movement of the designated range.

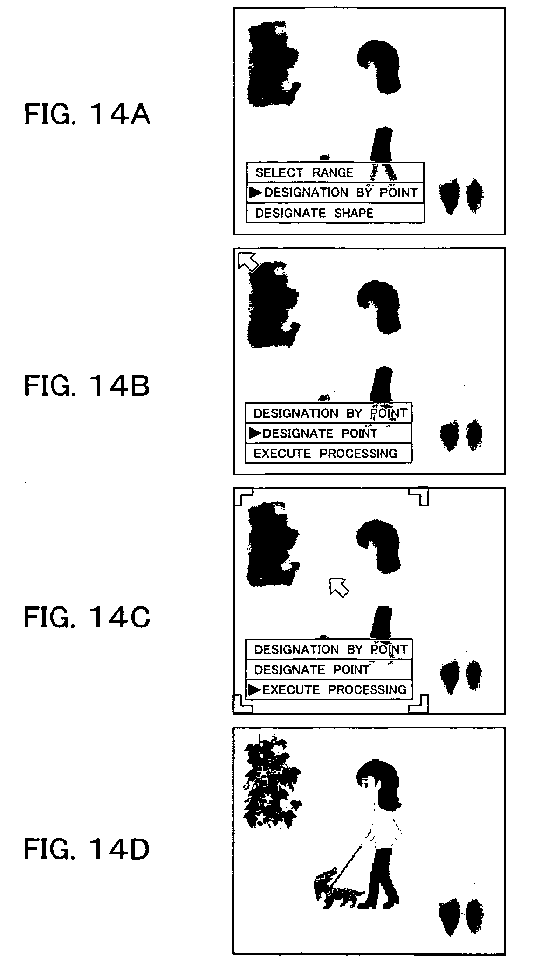

FIG. 14A to FIG. 14D show the routine by the operation portion 180.

As shown in FIG. 14A, first, the MENU button 1801 is depressed to cause the menu to be displayed in the liquid crystal screen 1701, then the cross key 1803 or zoom button 1802 is used to select the range. The range may be selected and the size adjusted by either designation by points as shown in FIG. 11 or by selection of a shape of a range prepared as a template in advance.

When designation by points is selected, as shown in FIG. 14B and FIG. 14C, an arrow appears on the liquid crystal screen 1701. By moving this arrow by the cross key 1803 and depressing the center of the cross key 1803, a corner is determined. By repeating this four times, the state of FIG. 14C is exhibited. The zoom button 1802 is used to select execution of the processing and the center of the cross key 1803 is depressed. Then, although illustration is omitted, whether to make the designated range a blurred image or a focused image is selected. When the designated range is made a focused image, the image as shown in FIG. 14D is displayed and, at the same time, a combined image of this blurred image and the focused image is recorded in the image display memory 160.

Note that, in the present embodiment, a case where the range (position and size) of the blurred image or focused image was designated and the blurred image and focused image were combined to generate and record a new image was explained. As another embodiment, an extent of blurring of the blurred image may be made selectable by the selection of the kernel data explained later by the operation portion 180 or the selection of any of a plurality of filters shown in FIG. 9. Due to this, it becomes possible to combine selected one or more blurred images and the focused image to generate a new image.

Further, in the present embodiment, as another embodiment, it is possible to suitably blur everything other than the blurred image and focused image to generate a suitably focused intermediate image. In the present invention, the intermediate image means an image which is not more focused than the focused image, but not more blurred than the blurred image. This can be generated by performing processing which is the same as the processing for generating the focused image, but does not generate a perfect focused image, for example processing by a coefficient different from the coefficient for obtaining the focused image. This other embodiment of the present invention is characterized by combining the intermediate image after the signal processing and the focused image to form a new image.

According to this generation function, it becomes possible to generate an intermediate image in the background region, generate a focused image in the object region including the main object, and combine these images to generate a new image. When combining a blurred image and focused image, a big difference occurs in the image quality in the vicinity of the combined portions and there is a possibility of unnatural blurriness. However, as explained above, by employing an intermediate image in place of the blurred image, the difference of image quality in the vicinity of the combined portions is reduced and it becomes possible to exhibit a more natural blurriness. Due to this, even in a case where a blurred image is replaced by an intermediate image in the present embodiment, the effects of the present invention can be obtained.

Further, in the present embodiment, the case of single signal processing portions 140, 150, and 190 was explained. However, when an intermediate image is generated, two of each of the signal processing portions 140, 150, 190, etc. may be provided as well. By providing two, one can be used as the signal processing portion for generating the focused image, and the other can be used as the signal processing portion for generating the intermediate image. The processing speed can be raised since the generation of the focused image and the generation of the intermediate image can be performed simultaneously.

The imaging apparatus 100 of the present embodiment has characterizing configurations in the optical system and image processing device as will be explained below so that a person etc. can be made more distinct without being influenced by camera shake etc.

Below, the configurations and functions of the optical system and image processing device of the present embodiment will be explained concretely.

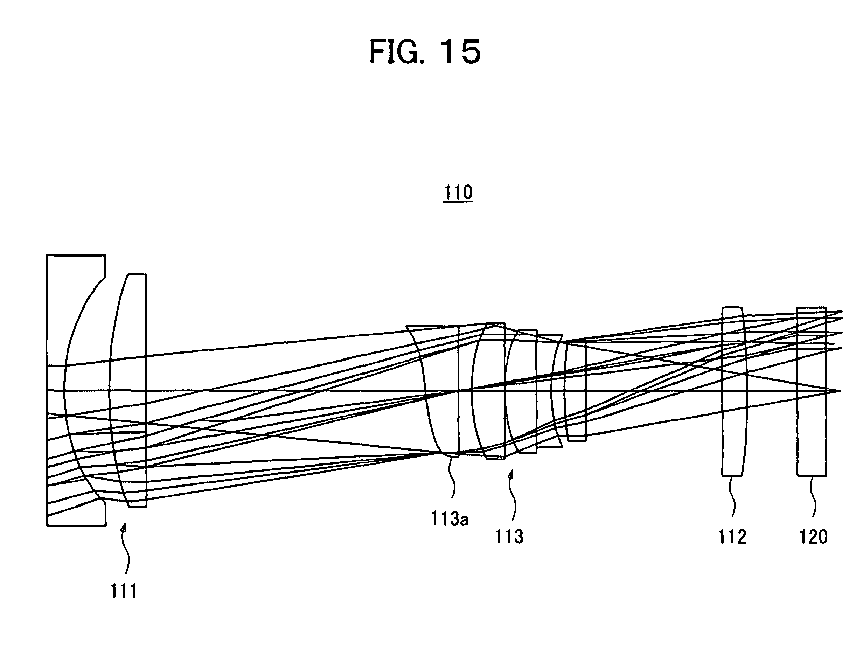

FIG. 15 is a diagram schematically showing an example of the configuration of the zoom optical system 110 according to the present embodiment. This diagram shows the wide angle side.

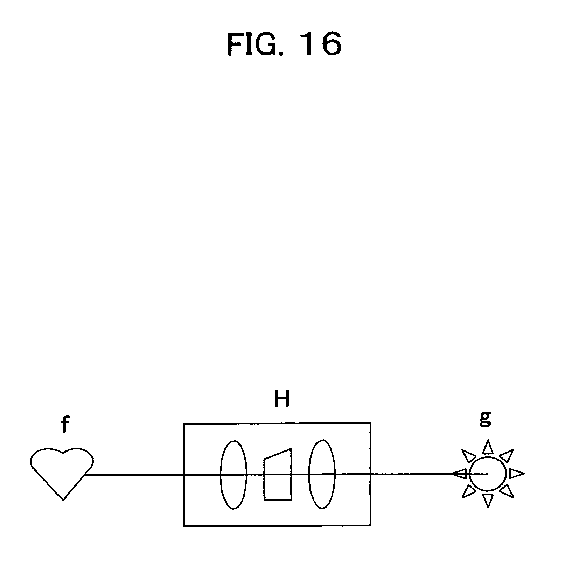

Further, FIG. 16 is a diagram for explaining a principle of the wavefront aberration control optical system.

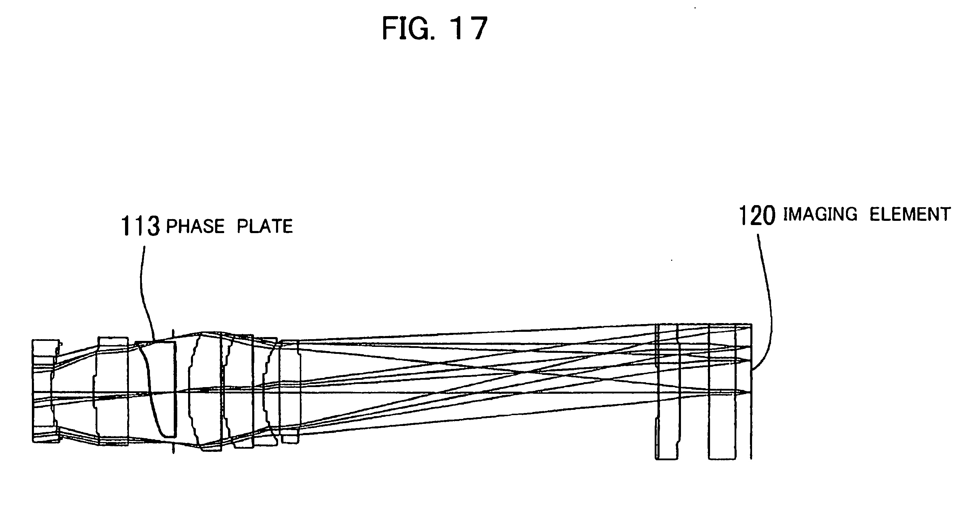

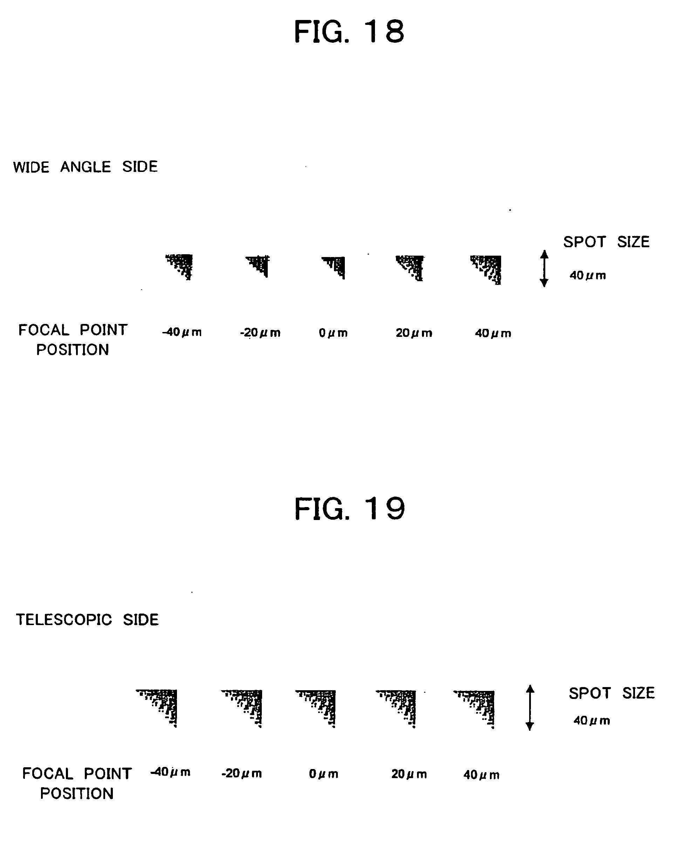

Further, FIG. 17 is a diagram schematically showing an example of the configuration of the zoom optical system 110 according to the present embodiment. FIG. 18 is a diagram showing a spot shape of the center of the image height on the wide angle side, and FIG. 19 is a diagram showing a spot shape of the center of the image height on the telescopic side.

The zoom optical system 110 of FIG. 15 has an object side lens 111 arranged on the object side OBJS, an imaging lens 112 for forming an image in the imaging element 120, and an optical wavefront modulation element (wavefront coding optical element) group 113 arranged between the object side lens 111 and the imaging lens 112 and including a phase plate (cubic phase plate) deforming the wavefront of the image formed on the light receiving surface of the imaging element 120 by the imaging lens 112 and having for example a three-dimensional curved surface. Further, a not shown stop is arranged between the object side lens 111 and the imaging lens 112.

Note that, in the present embodiment, a case where a phase plate was used was explained, but the optical wavefront modulation elements of the present invention may include any elements so far as they deform the wavefront. They may include optical elements changing in thickness (for example, the above-explained third-order phase plate), optical elements changing in refractive index (for example, a refractive index distribution type wavefront modulation lens), optical elements changing in thickness and refractive index by the coding on the lens surface (for example, a wavefront coding hybrid lens), liquid crystal elements able to modulate the phase distribution of the light (for example, liquid crystal spatial phase modulation elements), and other optical wavefront modulation elements.

The zoom optical system 110 of FIG. 15 is an example of inserting an optical phase plate 113a into a 3X zoom system used in a digital camera.

The phase plate 113a shown in the figure is an optical lens regularly diffusing the light beams converged by the optical system. By inserting this phase plate, an image not focused anywhere on the imaging element 120 is realized.

In other words, the phase plate 113a forms light beams having a deep depth (playing a central role in the image formation) and flare (blurred portion).

A means for restoring this regularly diffused image to a focused image by digital processing will be referred to as a wavefront aberration control optical system. This processing is carried out in the image processing device 140.

Here, the basic principle of the wavefront aberration control optical system will be explained.

As shown in FIG. 16, an image $\underline{f}$ of the object enters into the optical system H of the wavefront aberration control optical system, whereby a $\underline{g}$ image is generated.

This is represented by the following equation.

$$\textbf{(Equation 1)}$$

$$\textbf{g=H*f}$$

Note that, * represents convolution.

In order to find the object from the generated image, the next processing is required.

## (Equation 2)

$$f = H^{-1} * g$$

Here, the kernel size and operational coefficients concerning H will be explained.

Assume that the zoom positions are Zpn, Zpn-1, .... Further, assume that the individual H functions are Hn, Hn-1, ....

The spots are different, therefore the H functions become as follows.

## [Equation 3]

$$Hn = \begin{pmatrix} a & b & c \\ d & e & f \end{pmatrix}$$

$$Hn-1 = \begin{pmatrix} a' & b' & c' \\ d' & e' & f' \\ g' & h' & i' \end{pmatrix}$$

The difference of the number of rows and/or the number of columns of this matrix is referred to as the "kernel size". The numbers are the operational coefficients.

Here, each H function may be stored in the memory. By using the PSF as a function of the object distance, using the object distance for calculation, and calculating the H function, it is also possible to set the system so as to create the optimum filter for any object distance. Further, it is also possible to use the H function as a function of the object distance and directly find the H function by the object distance.

In the present embodiment, as shown in FIG. 3, the configuration is made so that the image from the optical system 110 is received at the imaging element 120 and input to the image processing device 140, a conversion coefficient in accordance with the optical system is acquired, and a diffusion-free image signal is generated from the diffused image signal from the imaging element 120 with the acquired conversion coefficient.

Note that, in the present embodiment, "diffusion" means the phenomenon where as explained above, inserting the phase plate 113a causes the formation of an image not focused anywhere on the imaging element 120 and the formation of light beams having a deep depth (playing a central role in the image formation) and flare (blurred portion) by the phase plate 113a and includes the same meaning as aberration because of the behavior of the image being diffused and forming a blurred portion. Accordingly, in the present embodiment, there also exists a case where diffusion is explained as aberration.

Next, the configuration and processing of the image processing device 140 will be explained.

The image processing device 140, as shown in FIG. 3, has a raw buffer memory 141, convolution processor 142, kernel data storage ROM 143 serving as the storing means, and convolution control portion 144.

The convolution control portion 144 turns the convolution processing ON/OFF, controls the screen size, replaces kernel data, etc. and is controlled by the exposure control device 190.

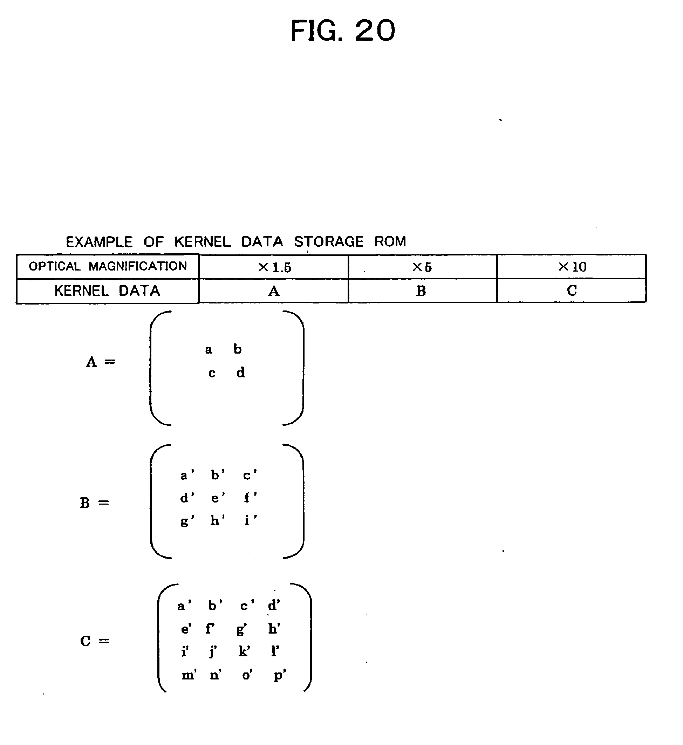

Further, the kernel data storage ROM 143, as shown in FIG. 20, stores the convolution use kernel data prepared in advance calculated by the PSF of each optical system. The exposure information determined at the time of setting the exposure is acquired by the exposure control device 190, while the kernel data is selected and controlled through the convolution control portion 144.

In the example of FIG. 20, the kernel data A becomes data corresponding to the optical magnification (X1.5), the kernel data B becomes data corresponding to the optical magnification (X5), and the kernel data C becomes data corresponding to the optical magnification (X10).

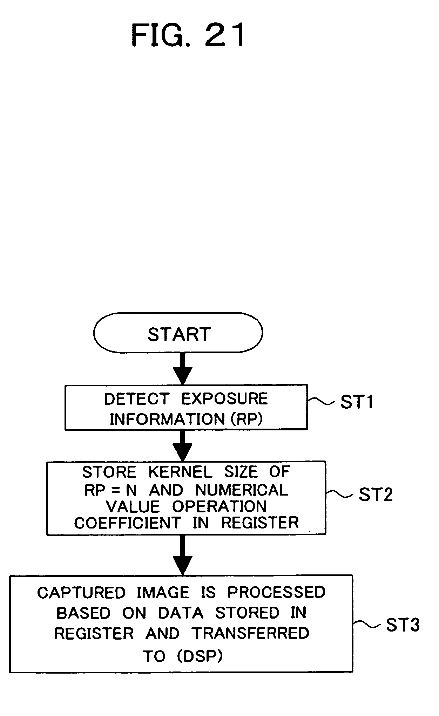

FIG. 21 is a flow chart of the switch processing according to the exposure information of the exposure control device 190.

First, the exposure information (RP) is detected and supplied to the convolution control portion 144 (ST21).

In the convolution control portion 144, the kernel size and numerical value operational coefficients are set in a register from the exposure information RP (ST22).

Then, the convolution operation is carried out on the image data captured at the imaging element 120 and input via the AFE 130 to the two-dimensional convolution processing portion 142 based on the data stored in the register. The processed and converted data is transferred to the camera signal processing portion 150 (ST23).

Below, a more specific example of the signal processing portion and kernel data storage ROM of the image processing device 140 will be explained.

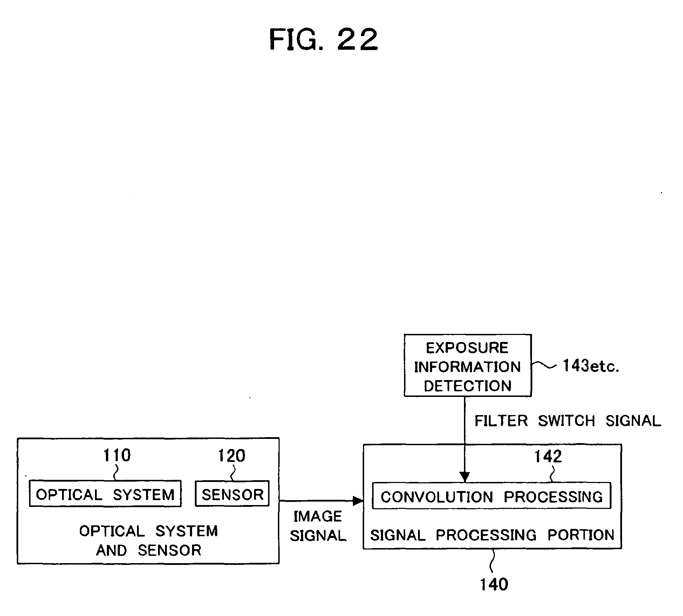

FIG. 22 is a diagram showing a first example of the configuration of the signal processing portion and kernel data storage ROM. Note that, for simplification, the AFE etc. are omitted.

The example of FIG. 22 is a block diagram of a case where a filter kernel in accordance with the exposure information is prepared in advance.

The exposure information determined at the time of setting the exposure is acquired, and the kernel data is selected and controlled through the convolution control portion 144. In the two-dimensional convolution operation portion 142, the convolution processing is applied by using the kernel data.

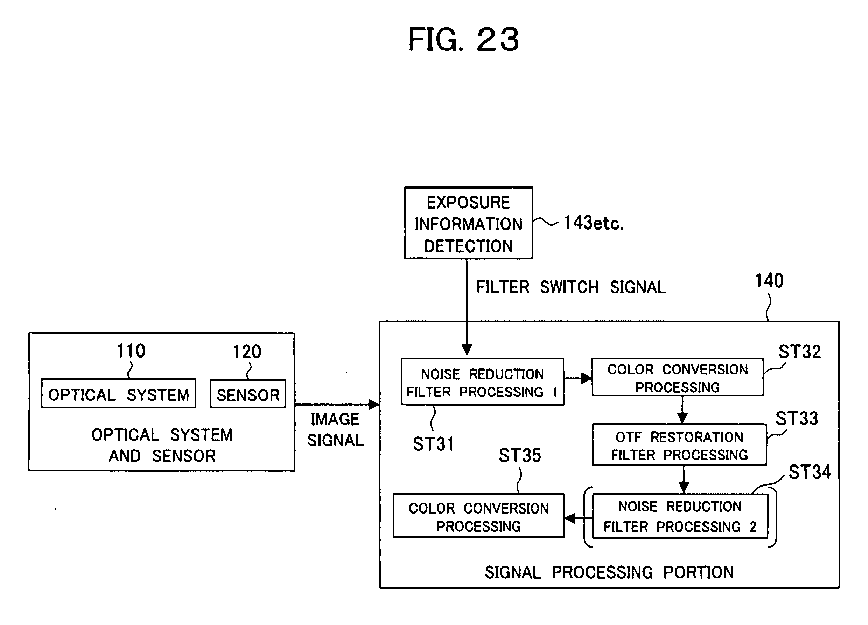

FIG. 23 is a diagram showing a second example of the configuration for the signal processing portion and kernel data storage ROM. Note that, for simplification, the AFE etc. are omitted.

The example of FIG. 23 is a block diagram in a case where a step of noise reduction filter processing is provided in the first of the signal processing portion, and noise reduction filter processing ST31 in accordance with the exposure information is prepared in advance as the filter kernel data.

The exposure information determined at the time of setting the exposure is acquired, and the kernel data is selected and controlled through the convolution control portion 144.

In the two-dimensional convolution operation portion 142, after applying the noise reduction filter ST31, the color space is converted by color conversion processing ST32, then convolution processing ST33 is applied by using the kernel data after that.

The noise processing ST34 is carried out again, and the color space is returned to the original one by the color conversion processing ST35. As the color conversion processing, for example YCbCr conversion can be mentioned, but another conversion may be employed.

Note that, it is also possible to omit the second noise processing ST34.

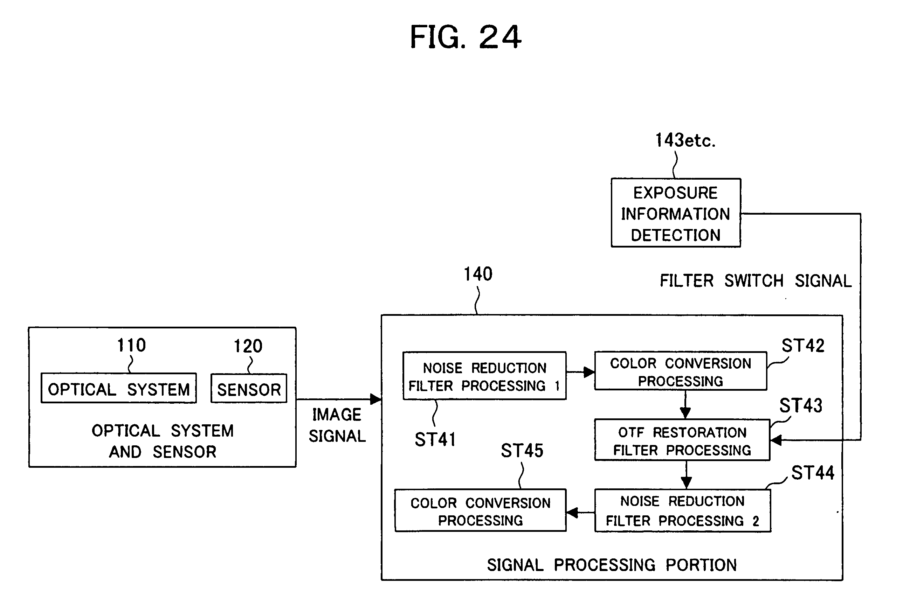

FIG. 24 is a diagram showing a third example of the configuration of the signal processing portion and kernel data storage ROM. Note that, for simplification, the AFE etc. are omitted.

The example of FIG. 24 is a block diagram in a case where an OTF restoration filter in accordance with the exposure information is prepared in advance.

The exposure information determined at the time of setting the exposure is acquired, and the kernel data is selected and controlled through the convolution control portion 144.

The two-dimensional convolution operation portion 142 applies convolution processing ST43 by using the OTF restoration filter after noise reduction processing ST41 and color conversion processing ST42.

The noise processing ST44 is carried out again, and the color space is returned to the original one by the color conversion processing ST45. As the color conversion processing, for example YCbCr conversion can be mentioned, but other conversion may also be employed.

Note that, either the noise recording processing ST41 or ST44 may be carried out as well.

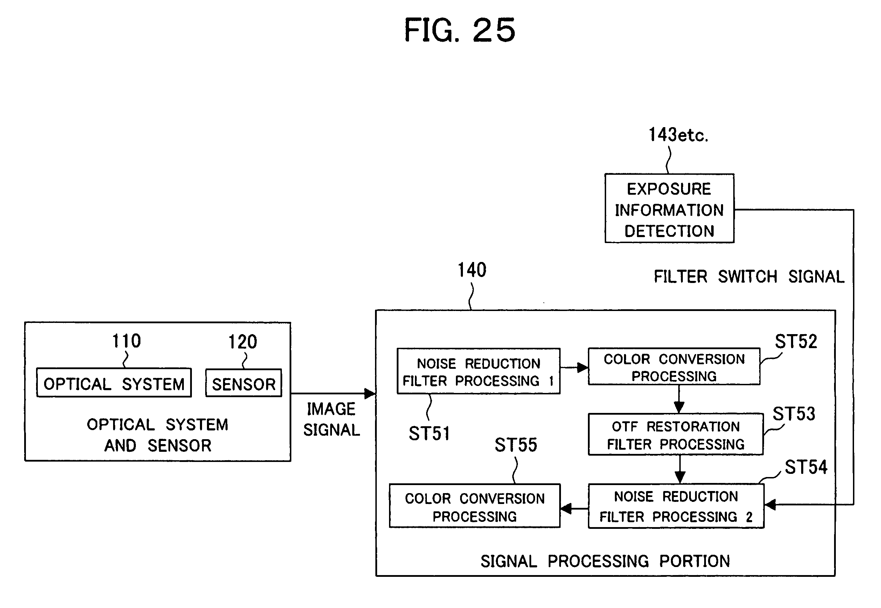

FIG. 25 is a diagram showing a fourth example of the configuration of the signal processing portion and kernel data storage ROM. Note that, for simplification, the AFE etc. are omitted.

The example of FIG. 25 is a block diagram in a case where a step of noise reduction filter processing is provided, and a noise reduction filter in accordance with the exposure information is prepared in advance as the kernel data.

Note that it is also possible to omit the second noise processing ST5.

The exposure information determined at the time of setting the exposure is acquired, and the kernel data is selected and controlled through the convolution control portion 144.

In the two-dimensional convolution operation portion 142, after applying the noise reduction filter ST51, the color space is converted by color conversion processing ST52, then convolution processing ST53 is applied by using the kernel data after that.

The noise processing ST54 in accordance with the exposure information is carried out again, and the color space is returned to the original one by the color conversion processing ST55. As the color conversion processing, for example, the YCbCr conversion can be mentioned, but other conversion may be employed.

Note that, it is also possible to omit the noise reduction processing ST51.

An explanation was given above of the example of performing the filter processing in the two-dimensional convolution operation portion 143 in accordance with only the exposure information. However, it becomes possible to perform extraction or operation of the suitable operational coefficient by combining for example the object distance information, zoom information, or imaging mode information with the exposure information.

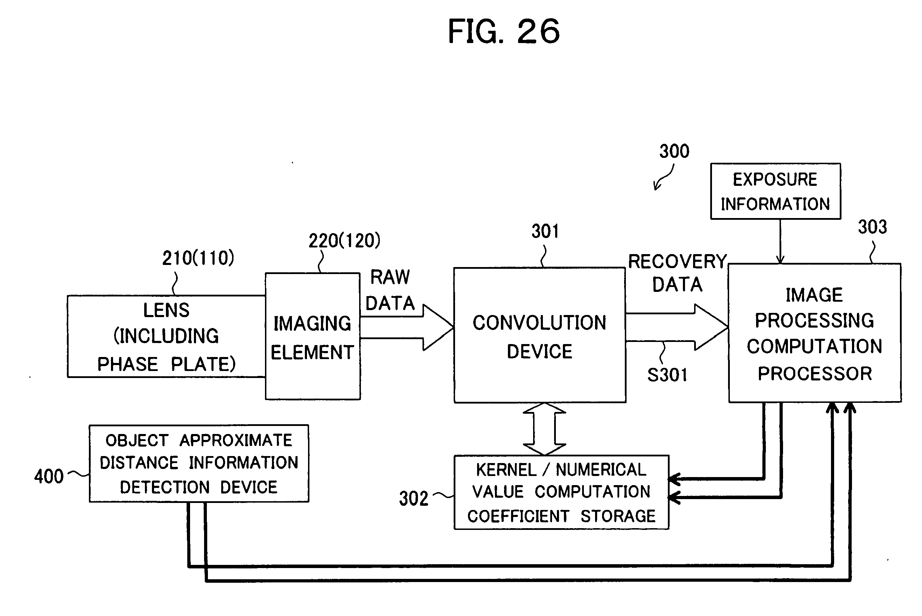

FIG. 26 is a diagram showing an example of the configuration of the image processing device combining the object distance information and exposure information.

FIG. 26 shows an example of the configuration of an image processing device 300 generating a diffusion-free image signal from the diffused image signal of the object from the imaging element.

Note that the imaging system in FIG. 26 has a zoom optical system 210 corresponding to the optical system 110 of FIG. 3 and an imaging element 220 corresponding to the imaging element 120 of FIG. 3. Further, the zoom optical system 210 has a phase plate 113a explained before.

The image processing device 300, as shown in FIG. 26, has a convolution device 301, a kernel and/or numerical value operational coefficient storage register 302, and an image processing computation processor 303.

In this image processing device 300, the image processing computation processor 303 obtaining information concerning the approximate distance of the object distance of the object read out from the object approximate distance information detection device 400 and the exposure information stores the kernel size and its operational coefficients used in suitable operation with respect to the object distance position in the kernel and/or numerical value operational coefficient storage register 302 and performs suitable operation at the convolution device 301 by using those values for operation to restore the image.

As explained above, in the case of an imaging apparatus provided with a phase plate (wavefront coding optical element) as an optical wavefront modulation element, if within a predetermined focal distance range, a suitable aberration-free image signal can be generated by image processing concerning that range, but if out of the predetermined focal length range, there is a limit to the correction of the image processing, therefore only an object out of the above range ends up becoming an image signal with aberration.

Further, on the other hand, by applying image processing not causing aberration within a predetermined narrow range, it also becomes possible to give blurriness to an image out of the predetermined narrow range.

The present example is configured so as to detect the distance up to the main object by the object approximate distance information detection device 400 including the distance detection sensor and perform processing for image correction different in accordance with the detected distance.

The above image processing is carried out by a convolution operation. In order to accomplish this, for example, it is possible to employ a configuration commonly storing one type of operational coefficient of the convolution operation, storing in advance a correction coefficient in accordance with the focal length, correcting the operational coefficient by using this correction coefficient, and performing suitable convolution operation by the corrected operational coefficient.

Other than this configuration, it is possible to employ the following configurations.

It is possible to employ a configuration storing in advance the kernel size and the operational coefficient itself of the convolution in accordance with the focal length and performing convolution operation by these stored kernel size and operational coefficient, a configuration storing in advance the operational coefficient in accordance with a focal length as a function, finding the operational coefficient by this function according to the focal length, and performing the convolution operation by the calculated operational coefficient, and so on.

When linked with the configuration of FIG. 26, the following configuration can be employed.

At least two conversion coefficients corresponding to the aberration due to at least the phase plate 113a are stored in advance in the register 302 serving as the conversion coefficient storing means in accordance with the object distance. The image processing computation processor 303 functions as the coefficient selecting means for selecting a conversion coefficient in accordance with the distance up to the object from the register 302 based on the information generated by the object approximate distance information detection device 400 as the object distance information generating means.

Then, the convolution device 301 serving as the converting means converts the image signal according to the conversion coefficient selected at the image processing computation processor 303 as the coefficient selecting means.

Alternatively, as explained above, the image processing computation processor 303 as the conversion coefficient processing means computes the conversion coefficient based on the information generated by the object approximate distance information detection device 400 as the object distance information generating means and stores the same in the register 302.

Then, the convolution device 301 serving as the converting means converts the image signal according to the conversion coefficient obtained by the image processing computation processor 303 serving as the conversion coefficient operation means and stored in the register 302.

Alternatively, at least one correction value in accordance with the zoom position or zoom amount of the zoom optical system 210 is stored in advance in the register 302 serving as the correction value storing means. This correction value includes the kernel size of the object aberration image.

The register 302, functioning also as the second conversion coefficient storing means, stores in advance the conversion coefficient corresponding to the aberration due to the phase plate 113a.

Then, based on the distance information generated by the object approximate distance information detection device 400 serving as the object distance information generating means, the image processing computation processor 303 serving as the correction value selecting means selects the correction value in accordance with the distance up to the object from the register 302 serving as the correction value storing means.

The convolution device 301 serving as the converting means converts the image signal based on the conversion coefficient obtained from the register 302 serving as the second conversion coefficient storing means and the correction value selected by the image processing computation processor 303 serving as the correction value selecting means.

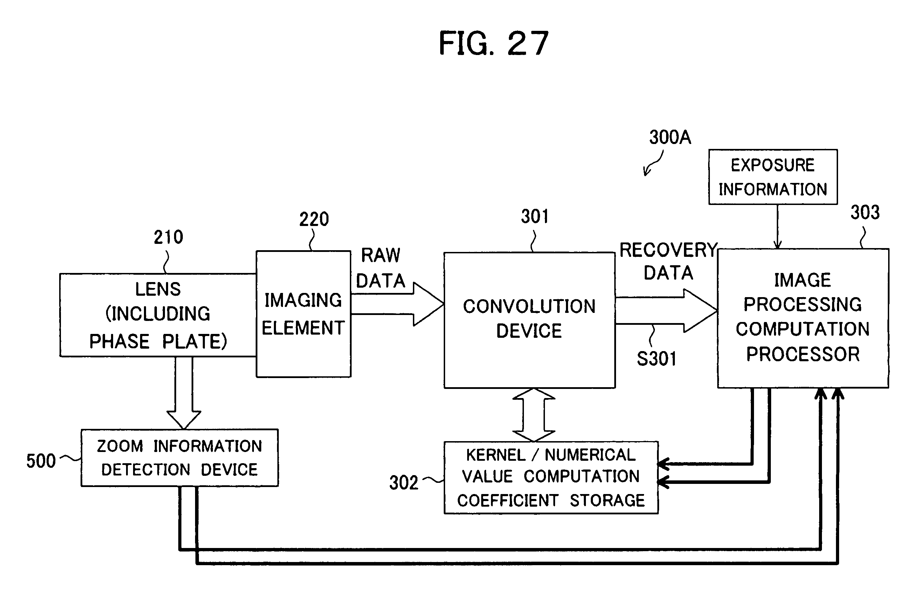

FIG. 27 is a diagram showing an example of the configuration of the image processing device combining the zoom information and exposure information.

FIG. 27 shows an example of the configuration of an image processing device 300A generating a diffusion-free image signal from the diffused image signal of the object from the imaging element 220.

The image processing device 300A, in the same way as FIG. 26, as shown in FIG. 27, has a convolution device 301, a kernel and/or numerical value operational coefficient storage register 302, and an image processing computation processor 303.

In this image processing device 300A, the image processing computation processor 303 obtaining information concerning the zoom position or zoom amount read out from the zoom information detection device 500 and exposure information stores the kernel size and its operational coefficients used in suitable operation with respect to the exposure information and its zoom position in the kernel and/or numerical value operational coefficient storage register 302 and performs suitable operation at the convolution device 301 by using those values for operation to restore the image.

As explained above, when applying a phase plate serving as the optical wavefront modulation element to an imaging apparatus provided in a zoom optical system, the generated spot image differs according to the zoom position of the zoom optical system. For this reason, when performing the convolution operation of a focal point deviated image (spot image) obtained by the phase plate in a later DSP etc., in order to obtain the suitable focused image, convolution operation differing in accordance with the zoom position becomes necessary.

Therefore, the present embodiment is configured provided with the zoom information detection device 500, performing a suitable convolution operation in accordance with the zoom position, and obtaining a suitable focused image without regard as to the zoom position.

For suitable convolution operation in the image processing device 300A, it is possible to employ a configuration commonly storing one type of operational coefficient of convolution in the register 302.

Other than this configuration, it is also possible to employ the following configurations.

It is possible to employ a configuration storing in advance a correction coefficient in the register 302 in accordance with each zoom position, correcting the operational coefficient by using this correction coefficient, and performing a suitable convolution operation by the corrected operational coefficient, a configuration storing in advance the kernel size and the operational coefficient per se of the convolution in the register 302 in accordance with each zoom position and performing the convolution operation by these stored kernel size and operational coefficient, a configuration storing in advance the operational coefficient in accordance with the zoom position as a function in the register 302, finding the operational coefficient by this function according to the zoom position, and performing the convolution operation by the computed operational coefficient, and so on.

When linking this with the configuration of FIG. 27, the following configuration can be employed.

At least two conversion coefficients corresponding to aberrations caused by the phase plate 113a in accordance with the zoom position or zoom amount of the zoom optical system 210 are stored in advance in the register 302 serving as the conversion coefficient storing means. The image processing computation processor 303 functions as the coefficient selecting means for selecting the conversion coefficient in accordance with the zoom position or zoom amount of the zoom optical system 210 from the register 302 based on the information generated by the zoom information detection device 400 serving as the zoom information generating means.

Further, the convolution device 301 serving as the converting means converts the image signal according to the conversion coefficient selected at the image processing computation processor 303 serving as the coefficient selecting means.

Alternatively, as explained before, the image processing computation processor 303 serving as the conversion coefficient operation means processes the conversion coefficient based on the information generated by the zoom information detection device 500 serving as the zoom information generating means and stores the same in the register 302.

Then, the convolution device 301 serving as the converting means converts the image signal according to the conversion coefficient obtained in the image processing computation processor 303 serving as the conversion coefficient operation means and stored in the register 302.

Alternatively, at least one correction value in accordance with the zoom position or zoom amount of the zoom optical system 210 is stored in advance in the register 302 serving as the correction value storing means. This correction value includes the kernel size of the object aberration image.

The register 302 functioning also as the second conversion coefficient storing means stores in advance a conversion coefficient corresponding to the aberration due to the phase plate 113a.

Then, based on the zoom information generated by the zoom information detection device 500 serving as the zoom information generating means, the image processing computation processor 303 serving as the correction value selecting means selects the correction value in accordance with the zoom position or zoom amount from the register 302 serving as the correction value storing means.

The convolution device 301 serving as the converting means converts the image signal based on the conversion coefficient obtained from the register 302 serving as the second conversion coefficient storing means and the correction value selected by the image processing computation processor 303 serving as the correction value selecting means.

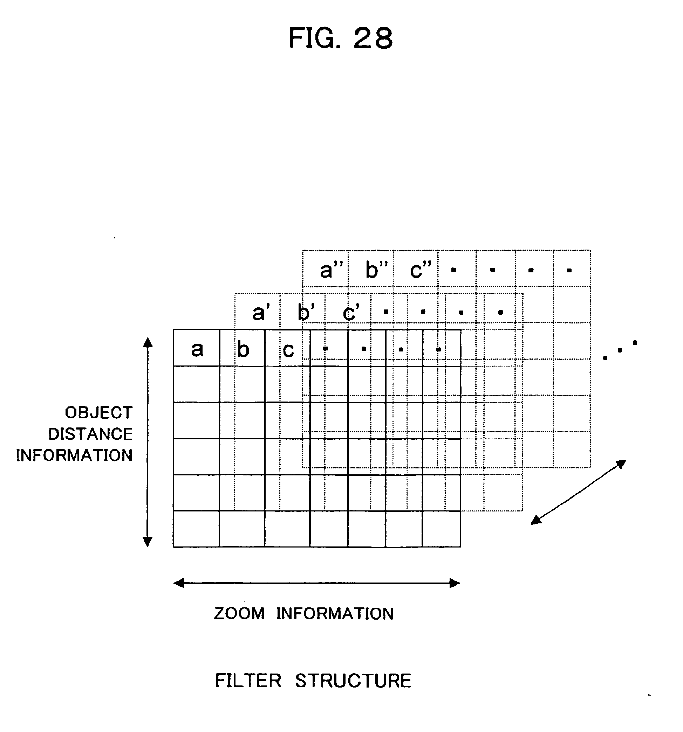

FIG. 28 shows an example of the configuration of a filter in the case where use is made of the exposure information, object distance information, and zoom information.

In this example, two-dimensional information is formed by the object distance information and zoom information, and the exposure information forms information like the depth.

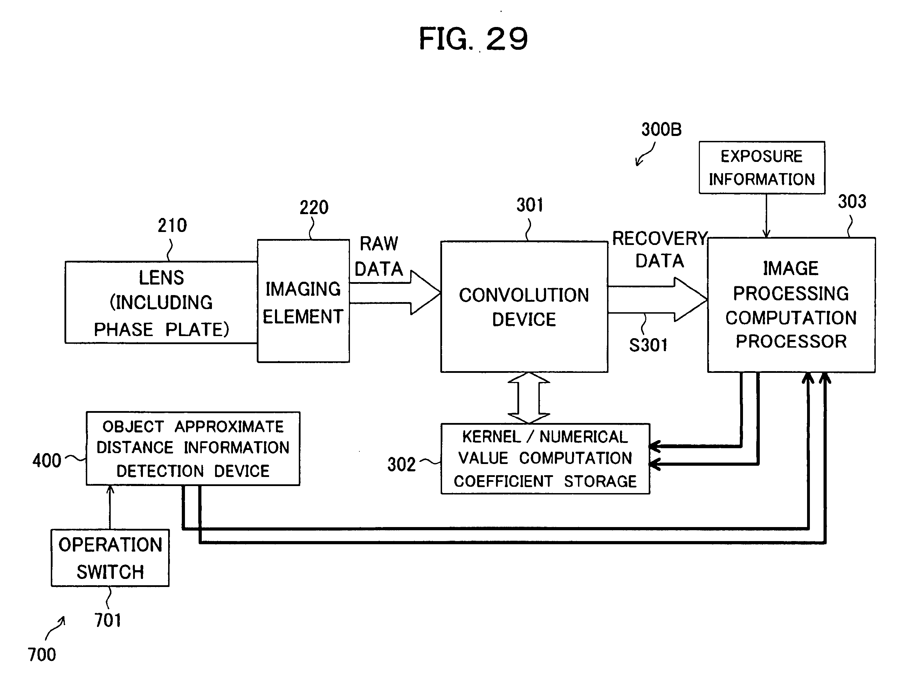

FIG. 29 is a diagram showing an example of the configuration of the image processing device combining the imaging mode information and exposure information. FIG. 29 shows an example of the configuration of an image processing device 300B generating a diffusion-free image signal from a diffused image signal of the object from the imaging element 220.

The image processing device 300B, in the same way as FIG. 26 and FIG. 27, as shown in FIG. 29, has a convolution device 301, a kernel and/or numerical value operational coefficient storage register 302 as the storing means, and an image processing computation processor 303.

In this image processing device 300B, the image processing computation processor 303 obtaining information concerning the approximate distance of the object distance of the object read out from the object approximate distance information detection device 400 and the exposure information stores the kernel size and its operational coefficients used in suitable operation with respect to the object distance position in the kernel and/or numerical value operational coefficient storage register 302 and performs suitable operation at the convolution device 301 by using those values for operation to restore the image.

Also in this case, as explained above, in the case of an imaging apparatus provided with a phase plate (wavefront coding optical element) serving as an optical wavefront modulation element, if within a predetermined focal distance range, a suitable aberration-free image signal can be generated by image processing concerning that range, but if out of the predetermined focal length range, there is a limit to the correction of the image processing, therefore only an object out of the above range ends up becoming an image signal with aberration. Further, on the other hand, by applying image processing not causing aberration within a predetermined narrow range, it also becomes possible to give blurriness to an image out of the predetermined narrow range.

The present example is configured so as to detect the distance up to the main object by the object approximate distance information detection device 400 including the distance detection sensor and perform processing for image correction different in accordance with the detected distance.

The above image processing is carried out by a convolution operation. In order to accomplish this, it is possible to employ a configuration commonly storing one type of operational coefficient of a convolution operation, storing in advance a correction coefficient in accordance with the object distance, correcting the operational coefficient by using this correction coefficient, and performing the suitable convolution operation with the corrected operational coefficient, a configuration storing in advance an operational coefficient in accordance with the object distance as a function, finding the operational coefficient by this function according to the focal length, and performing the convolution operation with the computed operational coefficient, and a configuration storing in advance the kernel size and the operational coefficient per se of convolution and performing the convolution operation by these stored kernel size and operational coefficient in accordance with the focal length, and so on.

In the present embodiment, as explained above, the image processing is changed in accordance with the mode setting of the DSC (portrait, infinitely distant (scene), and macro).

When linking this with the configuration of FIG. 29, the following configuration can be employed.

As explained before, a conversion coefficient differing in accordance with each imaging mode set by the imaging mode setup portion 700 of the operation portion 180 through the image processing computation processor 303 serving as the conversion coefficient processing means is stored in the register 302 serving as the conversion coefficient storing means.

The image processing computation processor 303 extracts the conversion coefficient from the register 302 serving as the conversion coefficient storing means based on the information generated by the object approximate distance information detection device 400 serving as the object distance information generating means in accordance with the imaging mode set by the operation switches 701 of the imaging mode setting portion 700. At this time, for example the image processing computation processor 303 functions as a conversion coefficient extracting means.

Further, the convolution device 301 serving as the converting means performs the conversion processing in accordance with the imaging mode of the image signal according to the conversion coefficient stored in the register 302.

Note that, the optical system in FIG. 15 or FIG. 17 is an example. The present invention is not always used for the optical system of FIG. 15 or FIG. 17. Further, the spot shape in FIG. 18 or FIG. 19 is an example as well. The spot shape of the present embodiment is not limited to those shown in FIG. 18 and FIG. 19.

Further, the kernel data storage ROM of FIG. 20 is not always used for the optical magnification and the size and value of each kernel either. Further, the number of kernel data to be prepared is not limited to three either. By employing three dimensions and further four or more dimensions as shown in FIG. 28, the amount of storage becomes large, but it becomes possible to select a more suitable one by taking various conditions into account. The information may be the above exposure information, object distance information, zoom information, imaging mode information, etc.

Note that, as explained above, in the case of an imaging apparatus provided with a phase plate (wavefront coding optical element) serving as an optical wavefront modulation element, if within a predetermined focal distance range, a suitable aberration-free image signal can be generated by image processing concerning that range, but if out of the predetermined focal length range, there is a limit to the correction of the image processing, therefore only an object out of the above range ends up becoming an image signal with aberration.

Further, on the other hand, by applying image processing not causing aberration within a predetermined narrow range, it also becomes possible to give blurriness to an image out of the predetermined narrow range.

In the present embodiment, the wavefront aberration control optical system is employed so it is possible to obtain a high definition image quality. In addition, the optical system can be simplified, and the cost can be reduced.

Below, these characteristic features will be explained.

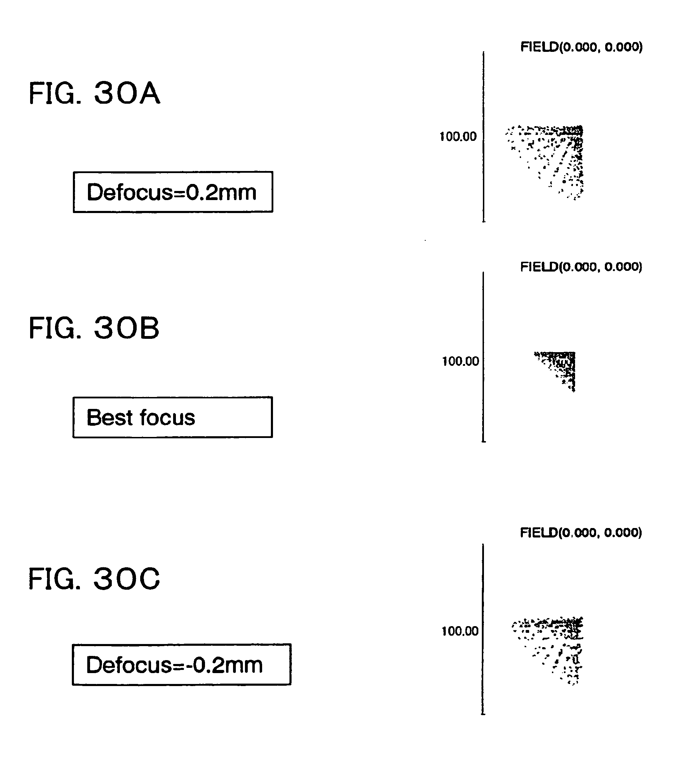

FIG. 30A to FIG. 30C show spot images on the light reception surface of the imaging element 120.

FIG. 30A is a diagram showing a spot image in the case where the focal point is deviated by 0.2 mm (defocus = 0.2 mm), FIG. 30B is a diagram showing a spot image in the case of focus (best focus), and FIG. 30C is a diagram showing a spot image in the case where the focal point is deviated by -0.2 mm (defocus = -0.2 mm).

As seen also from FIG. 30A to FIG. 30C, in the imaging apparatus 100 according to the present embodiment, light beams having a deep depth (playing a central role in the image formation) and flare (blurred portion) are formed by the wavefront forming optical element group 113 including the phase plate 113a.

In this way, the first-order image FIM formed in the imaging apparatus 100 of the present embodiment is given light beam conditions of extremely deep depth.

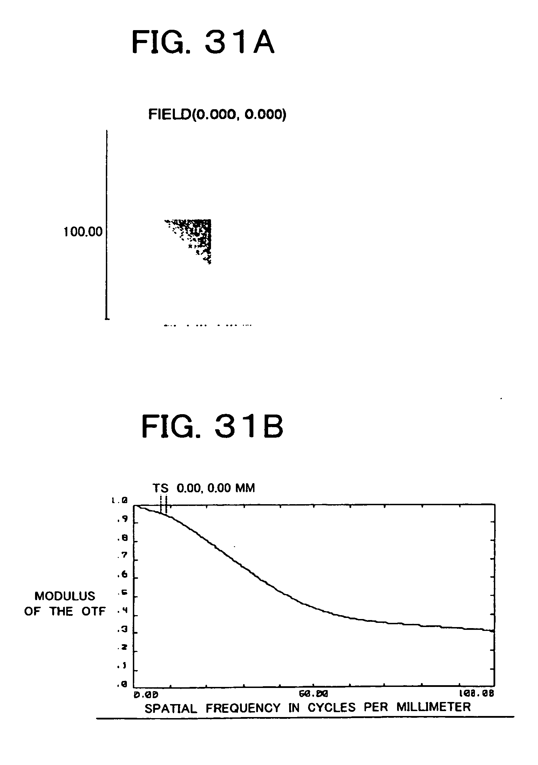

FIG. 31A and FIG. 31B are diagrams for explaining a modulation transfer function (MTF) of the first-order image formed by the imaging lens device according to the present embodiment, in which FIG. 31A is a diagram showing a spot image on the light receiving surface of the imaging element of the imaging lens device, and FIG. 31B shows the MTF characteristic with respect to the spatial frequency.

In the present embodiment, the high definition final image is left to the correction processing of the latter stage image processing device 140 configured by, for example, a digital signal processor. Therefore, as shown in FIG. 31A and FIG. 31B, the MTF of the first-order image essentially becomes a very low value.

The image processing device 140, as explained above, receives the first-order image FIM by the imaging element 120, applies predetermined correction processing etc. for boosting the MTF at the spatial frequency of the first-order image, and forms a high definition final image FNLIM.

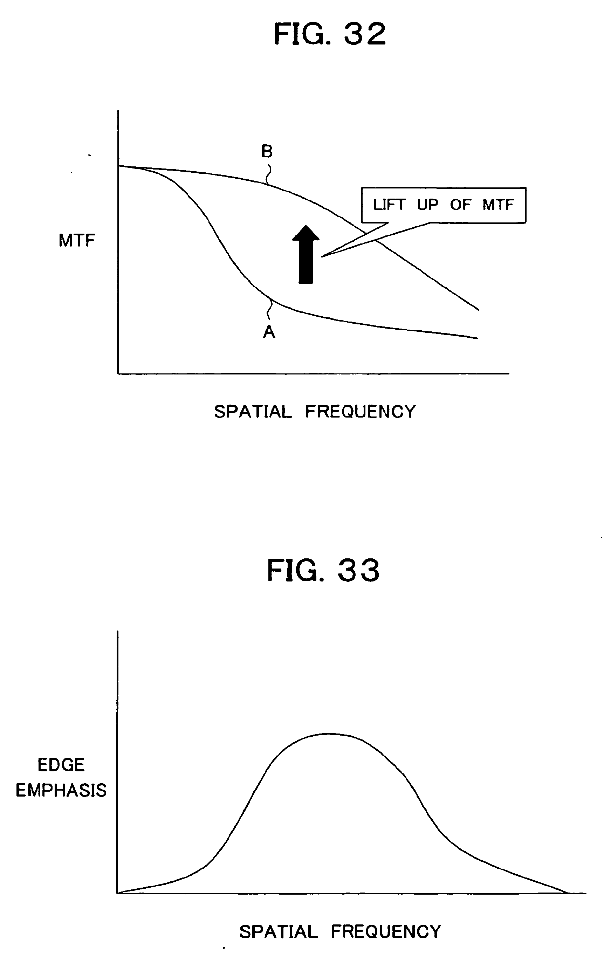

The MTF correction processing of the image processing device 140 performs correction so that, for example as indicated by a curve A of FIG. 32, the MTF of the first-order image which essentially becomes a low value approaches (reaches) the characteristic indicated by a curve B in FIG. 32 by post-processing such as edge enhancement and chroma enhancement by using the spatial frequency as a parameter.

The characteristic indicated by the curve B in FIG. 32 is the characteristic obtained in the case where the wavefront forming optical element is not used and the wavefront is not deformed as in for example the present embodiment.

Note that all corrections in the present embodiment are according to the parameter of the spatial frequency.

In the present embodiment, as shown in FIG. 32, in order to achieve the MTF characteristic curve B desired to be finally realized with respect to the MTF characteristic curve A for the optically obtained spatial frequency, the strength of the edge enhancement etc. is adjusted for each spatial frequency, to correct the original image (first-order image). For example, in the case of the MTF characteristic of FIG. 32, the curve of the edge enhancement with respect to the spatial frequency becomes as shown in FIG. 33.

Namely, by performing the correction by weakening the edge enhancement on the low frequency side and high frequency side within a predetermined bandwidth of the spatial frequency and strengthening the edge enhancement in an intermediate frequency zone, the desired MTF characteristic curve B is virtually realized.

In this way, the imaging apparatus 100 according to the embodiment is an image forming system basically configured by the optical system 110 and imaging element 120 forming the first-order image and by the image processing device 140 forming the first-order image to the high definition final image, wherein the optical system is newly provided with a wavefront forming optical element or is provided with a glass, plastic, or other optical element with a surface shaped for wavefront forming use so as to deform (modulate) the wavefront of the image formed, such a wavefront is focused onto the imaging surface (light receiving surface) of the imaging element 120 formed by a CCD or CMOS sensor, and the focused first-order image is passed through the image processing device 140 to obtain the high definition image.

In the present embodiment, the first-order image from the imaging element 120 is given light beam conditions with very deep depth. For this reason, the MTF of the first-order image inherently becomes a low value, and the MTF thereof is corrected by the image processing device 140.

Here, the process of image formation in the imaging apparatus 100 of the present embodiment will be considered in terms of wave optics.

A spherical wave scattered from one point of an object point becomes a converged wave after passing through the imaging optical system. At that time, when the imaging optical system is not an ideal optical system, aberration occurs. The wavefront becomes not spherical, but a complex shape. Geometric optics and wave optics are bridged by wavefront optics. This is convenient in the case where a wavefront phenomenon is handled.

When handling a wave optical MTF on an imaging plane, the wavefront information at an exit pupil position of the imaging optical system becomes important.

The MTF is calculated by a Fourier transform of the wave optical intensity distribution at the imaging point. The wave optical intensity distribution is obtained by squaring the wave optical amplitude distribution. That wave optical amplitude distribution is found from a Fourier transform of a pupil function at the exit pupil.

Further, the pupil function is the wavefront information (wavefront aberration) at the exit pupil position, therefore if the wavefront aberration can be strictly calculated as a numerical value through the optical system 110, the MTF can be calculated.

Accordingly, if modifying the wavefront information at the exit pupil position by a predetermined technique, the MTF value on the imaging plane can be freely changed.

In the present embodiment as well, the shape of the wavefront is mainly changed by a wavefront forming optical element. It is truly the phase (length of light path along the beams) that is adjusted to form the desired wavefront.

Then, when forming the target wavefront, the light beams from the exit pupil are formed by a dense beam portion and a sparse beam portion as seen from the geometric optical spot images shown in FIGS. 25A to 25C.

The MTF of this state of light beams exhibits a low value at a position where the spatial frequency is low and somehow maintains the resolution up to the position where the spatial frequency is high.

Namely, if this low MTF value (or, geometric optically, the state of the spot image), the phenomenon of aliasing will not be caused.

That is, a low pass filter is not necessary.

Further, the flare-like image causing a drop in the MTF value may be eliminated by the image processing device 140 configured by the later stage DSP etc. Due to this, the MTF value is remarkably improved.

Next, responses of MTF of the present embodiment and conventional optical system will be considered.

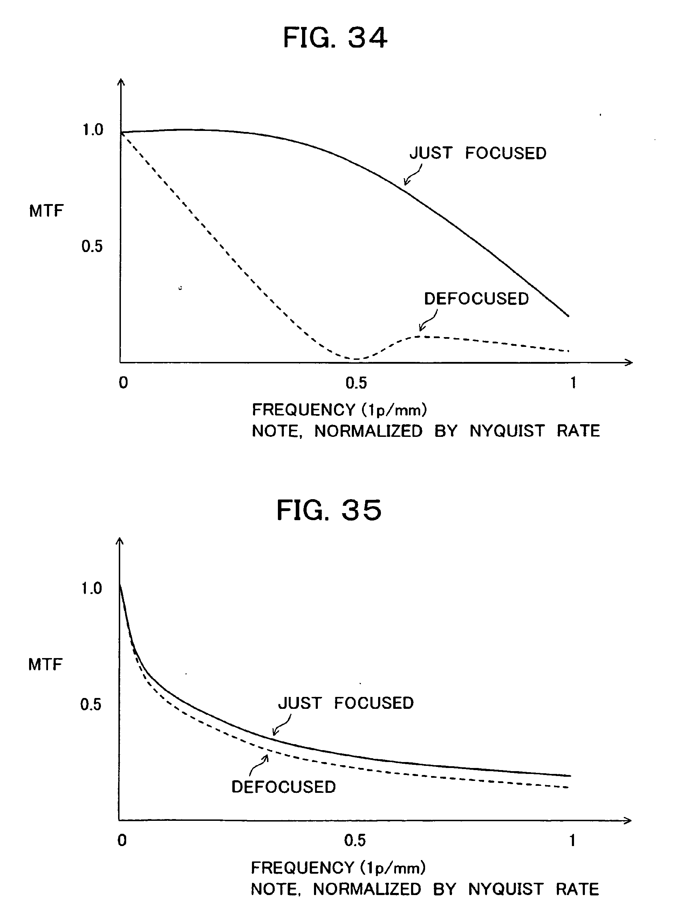

FIG. 34 is a diagram showing responses of MTF at the time when the object is located at the focal point position and the time when it is out of the focal point position in the case of a general optical system.

FIG. 35 is a diagram showing responses of MTF at the time when the object is located at the focal point position and the time when it is out of the focal point position in the case of the optical system of the present embodiment having an optical wavefront modulation element.

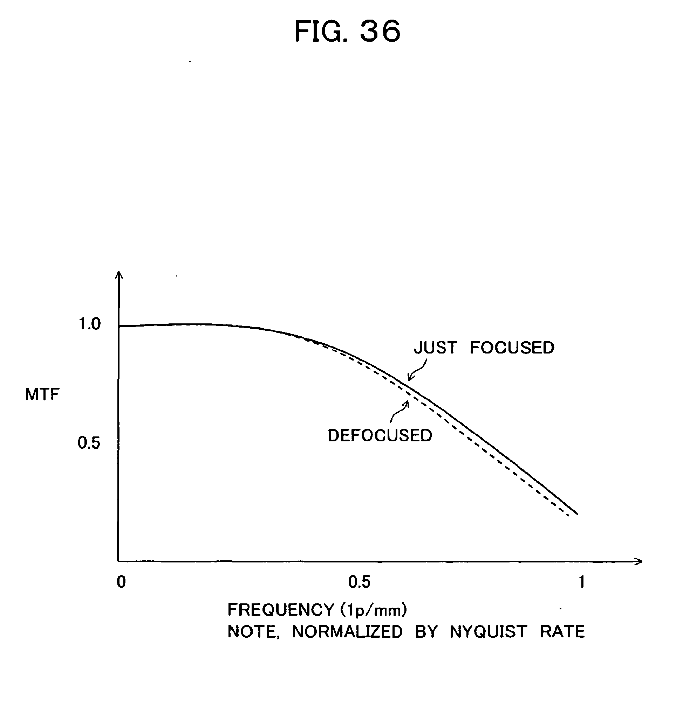

Further, FIG. 36 is a diagram showing the response of MTF after the data restoration of the imaging apparatus according to the present embodiment.

As seen from the figures as well, in the case of the optical system having the optical wavefront modulation element, even in the case where the object is out of the focal point position, the change of the response of MTF becomes smaller than that of the optical system without an optical wavefront modulation element inserted.

By the processing by the convolution filter of the image formed by this optical system, the response of MTF is improved.

As explained above, according to the present embodiment, the signal processing portion configured by the image processing device 140, DSP 150, and exposure control device 190 performs the predetermined signal processing with respect to the diffused image signal, for example, generation of a diffusion-free image signal from the diffused image of the object from the imaging element 120. This has a generation function of combining the image before the processing of this signal processing portion and the image after the processing to combine a new image. This generation function generates a plurality of images in the background region by blurred image processing, combines a focused image of the object region including the main object after the above processing to generate a new image, and provides a recording function of recording the image before the signal processing, the restored image after the processing, and combined new image in for example a not shown memory buffer or image display memory 160. Therefore the following effects can be obtained.

There are the advantages that portrait imaging can be easily carried out, it is possible to record the image before the signal processing and the image after the signal processing and thereby select the position or size of an area desired to be made clear (conversely, an area desired to be blurred) after the imaging and recording to prepare a new image, and it is possible to prepare a portrait captured image from an image captured in a mode other than the portrait mode at the time of imaging.

Further, it includes the optical system 110 and imaging element 120 forming the first-order image and the image processing device 140 forming the first-order images into the high definition final image. The image processing device 140 performs filter processing with respect to the optical transfer function (OTF) in accordance with the exposure information from the exposure control device 190. Therefore, there are the advantages that the optical system can be simplified, the costs can be reduced, and in addition restored images with little influence of noise can be obtained.

Further, by making the kernel size used at the time of the convolution operation and coefficients used for its numerical value operation variable, and linking the kernel size learned by inputs of the operation portion 180 etc. and found suitable and the coefficients explained above, there are the advantages that the lens design can be carried out without worrying about the magnification and defocus range, and high precision image restoration by convolution becomes possible.

Further, there are the advantages that an optical lens of a high degree of difficulty, expense, and large size is not needed. Further, a so-called natural image where the object to be captured is focused, but the background is blurred can be obtained without driving the lens.

Further, the imaging apparatus 100 according to the present embodiment can be used for wavefront aberration control optical systems of zoom lenses of digital cameras, camcorders, and other consumer apparatuses for which smaller size, lighter weight, and lower costs have to be considered.

Further, in the present embodiment, since the apparatus has an imaging lens system having a wavefront forming optical element for deforming the wavefront of an image formed on the light receiving surface of the imaging element 120 by the imaging lens 112 and the image processing device 140 for receiving the first-order image FIM by the imaging element 120 and applying predetermined correction processing etc. to boost the MTF at the spatial frequency of the first-order image and form the high definition final image FNLIM, there is the advantage that the acquisition of a high definition image quality becomes possible.

Further, the configuration of the optical system 110 can be simplified, production becomes easier, and the cost can be reduced.

The fact that when using a CCD or CMOS sensor as the imaging element, there is a resolution limit determined from the pixel pitch and, when the resolution of the optical system is over that limit resolution power, the phenomenon of aliasing occurs and exerts an adverse influence upon the final image is known.

For the improvement of the image quality, desirably the contrast is raised as much as possible, but this requires a high performance lens system.

However, as explained above, when using a CCD or CMOS sensor as the imaging element, aliasing occurs.

At present, in order to avoid the occurrence of aliasing, the imaging lens system jointly uses a low pass filter made of a monoaxial crystalline system to thereby avoid the phenomenon of aliasing.

The joint usage of the low pass filter in this way is correct in terms of principle, but the low pass filter per se is made of crystal, therefore is expensive and hard to manage. Further, there is the disadvantage that the optical system is more complicated due to the use in the optical system.

As described above, a higher definition image quality is demanded as a trend of the times. In order to form a high definition image, the optical system in a general imaging lens device must be made more complicated. If it is complicated, production becomes difficult. Also, the utilization of expensive low pass filters leads to an increase in the cost.

However, according to the present embodiment, the occurrence of the phenomenon of aliasing can be avoided without using a low pass filter, and it becomes possible to obtain a high definition image quality

Note that, in the present embodiment, the example of arranging the wavefront forming optical element of the optical system on the object side from the stop was shown, but functional effects the same as those described above can be obtained even by arranging the wavefront forming optical element at a position the same as the position of the stop or on the focus lens side from the stop.

Further, the optical system in FIG. 15 or FIG. 17 is an example. The present invention is not always used for the optical system of FIG. 15 or FIG. 17. Further, the spot shape in FIG. 18 or FIG. 19 is an example as well. The spot shape of the present embodiment is not limited to those shown in FIG. 18 and FIG. 19.

Further, the kernel data storage ROM of FIG. 20 is not always used for the optical magnification and size and value of the kernels. Further, the number of kernel data to be prepared is not limited to three either.

Further, the above embodiment was explained by taking as an example the case where there was one optical system, but the present invention can also be applied with respect to an imaging apparatus having a plurality of optical systems.

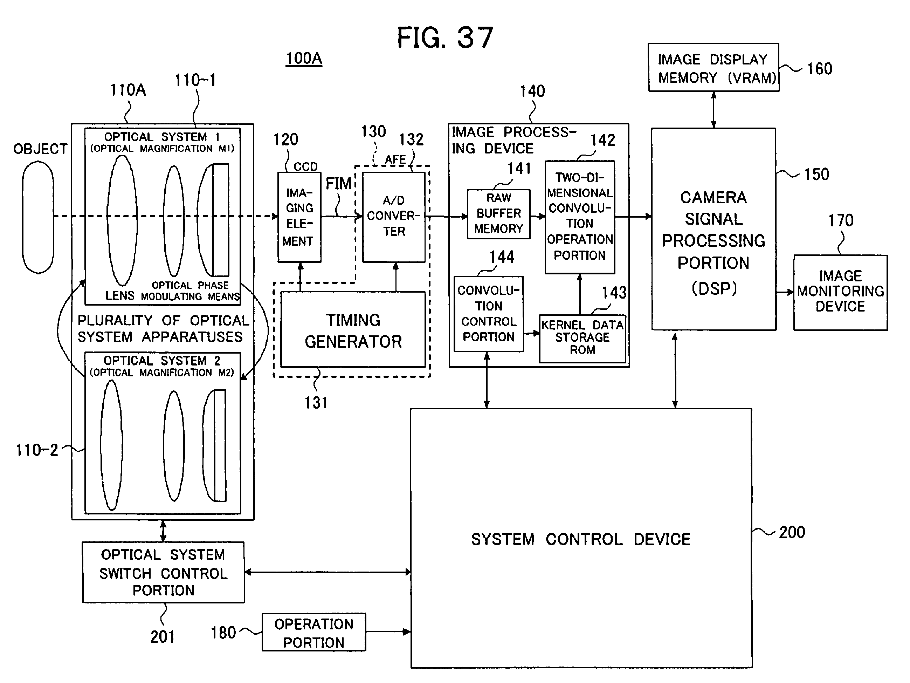

FIG. 37 is a block diagram of the configuration showing an embodiment of an imaging apparatus having a plurality of optical systems according to the present invention.

The difference between the present imaging apparatus 100A and the imaging apparatus 100 of FIG. 3 resides in that an optical unit 110A has a plurality of (two in the present embodiment) optical systems 110-1 and 110-2, provision is made of a system control device 200 in place of the exposure control device 190, and provision is further made of an optical system switch control portion 201.

The optical unit 110A has a plurality of (two in the present embodiment) optical systems 110-1 and 110-2 and sequentially supplies images obtained by capturing an image of the object OBJ to the imaging element 120 in response to the switch processing of the optical system switch control portion 201.

The optical systems 110-1 and 110-2 have different optical magnifications and optically fetch the image of the captured target object (object) OBJ.

The system control device 200 basically has the same function as that of the exposure control device, waits for the operation inputs of the operation portion 180 etc., determines the operation of the overall system in response to those inputs, controls the optical system switch control portion 201, AFE 130, image processing device 140, DSP 150, etc. and conducts the mediation control of the whole system.

The rest of the configuration is the same as FIG. 3.

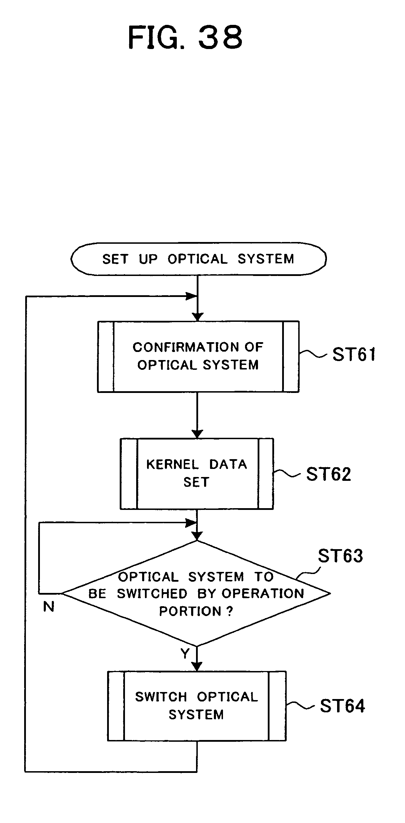

FIG. 38 is a flow chart schematically showing the processing for setting the optical system of the system control device 200.

First, the optical system is confirmed (ST61), then the kernel data is set (ST62).

Then, when the switching instruction of the optical systems is given by the operation of the operation portion 180 (ST63), the output of the optical system of the optical unit 110A is switched by the optical system switch control portion 210, and the processing of step ST61 is carried out (ST64).

According to the embodiment of FIG. 37, in addition to the effects of the imaging apparatus of FIG. 3 explained before, the following effects can be obtained. Namely, the imaging apparatus of FIG. 37 includes the optical unit 110A including a plurality of optical systems 110-1 and 110-2 having different magnifications for forming the first-order image and the imaging element 120 and the image processing device 140 for forming the first-order image into a high definition final image. In the image processing device 140, by making the kernel size used at the time of the convolution operation and coefficient used for its numerical value operation variable in accordance with the magnification of the optical system and linking the kernel size learned by inputs of the operation portion 180 etc. and found suitable in accordance with the magnification of the

optical system and the coefficients explained above, there are the advantages that the lens design can be carried out without worrying about the magnification and defocus range, and high precision image restoration by convolution becomes possible.

Further, there are the advantages that an optical lens of a high degree of difficulty, expense, and large size is not needed. Further, a so-called natural image where the object to be captured is focused, but the background is blurred can be obtained without driving the lens.

Further, the imaging apparatus 100 according to the present embodiment can be used for wavefront aberration control optical systems of zoom lenses of digital cameras, camcorders, and other consumer apparatuses for which smaller size, lighter weight, and lower costs have to be considered.

INDUSTRIAL APPLICABILITY

According to the imaging apparatus and image processing method of the present invention, the optical system can be simplified, the costs can be reduced, and in addition it is possible to obtain restored images with little influence of noise. Therefore, they can be applied to a digital still camera, a camera mounted in a mobile phone, a camera mounted in a digital personal assistant, an image inspection system, an industrial camera for automatic control, and so on.

**Claims**

1.  An imaging apparatus, comprising:

    an optical system (110) for converting light beams,
    an optical wavefront modulation element (113) for diffusing the light beams,
    an imaging element (120) capturing a diffused image of an object passed through at least the optical system (110) and the optical wavefront modulation element (113), and
    a signal processing portion (140) including a converting means for generating a diffusion-free image signal by performing a restoration processing with respect to a diffused image signal from the imaging element (120), **characterized in that**
    the signal processing portion (140) is adapted to extract a focused image of an object region including a main object from the diffused image, to perform the restoration processing for only the focused image and is adapted to extract an unfocused image of a background region as the outside region of the object region from the diffused image, and
the imaging apparatus further comprises a generating means (150, 190) adapted to combine the restored focused image of the object region and the unfocused image of the background region to form a new image.

2.  An imaging apparatus as set forth in claim 1, further comprising:

    a recording portion for recording an image before the restoration processing by the signal processing portion (140), an image after the restoration processing, and a combined new image.

3.  An imaging apparatus as set forth in claim 1 or 2, further comprising:

    a recording portion for recording a blurred image before the restoration processing by the signal processing portion (140), a focused image after the restoration processing, and/or a new image obtained by combining the blurred image before the restoration processing and the focused image after the restoration processing,
    a display portion (170) for displaying the image recorded in the recording portion or an image for recording, and
    an operation portion (180) for setting a range in the display portion (170) and/or selecting the blurred image, and
    the generating means (150, 190) is adapted to generate a focused image in the set range or out of the set range in the display portion (170) by the operation portion (180) to combine this with the blurred image to generate a new image and/or to combine one or more of the blurred images selected by the operation portion (170) with the focused image to generate said new image.

4.  An imaging apparatus as set forth in claim 1 or 2, further comprising:

    a recording portion for recording a blurred image before the restoration processing by the signal processing portion (140), a focused image after the restoration processing, or an intermediate image after the restoration processing, and/or a new image obtained by combining the blurred images, focused image, or intermediate image,
    a display portion (170) for displaying an image recorded in the recording portion or an image for recording, and

an operation portion (180) for setting a range in the display portion (170) and/or selecting a blurred image, and

the generating means (150, 190) is adapted to generate a focused image in the set range or out of the set range in the display portion (170) by the operation portion (180), to combine a range other than for generation of the focused image with the blurred image or intermediate image to generate a new image and/or to combine one or more of the blurred images selected by the operation portion (180) or the intermediate image with the focused image to generate said new image.

5. An imaging apparatus as set forth in anyone of claims 1 to 4, wherein

the optical system (110) includes a zoom optical system and has a zoom information generating means (500) for generating information corresponding to a zoom position or zoom amount of the zoom optical system, and

the converting means (150, 190) is adapted to generate a diffusion-free image signal from the diffused image signal based on the information generated by the zoom information generating means (500).

6. An imaging apparatus as set forth in anyone of claims 1 to 4, wherein

the apparatus includes an object distance information generating means (400) for generating information corresponding to a distance up to the object, and

the converting means (150, 190) is adapted to generate a diffusion-free image signal from the diffused image signal based on the information generated by the object distance information generating means (400).

7. An imaging apparatus as set forth in anyone of claims 1 to 4, wherein the apparatus includes

an object distance information generating means (400) for generating information corresponding to the distance up to the object and

a conversion coefficient operation means for performing operation to obtain a conversion coefficient based on the information generated by the object distance information generating means (400), and

the converting means (150, 190) is adapted to convert the image signal according to the conversion coefficient obtained from the conversion coefficient operation means and generate a diffusion-free image signal.

8. An imaging apparatus as set forth in anyone of claims 1 to 7, wherein the apparatus includes

an imaging mode setting means for setting the imaging mode of the object to be photographed, and

the converting means (150, 190) is adapted to perform different conversion processing in accordance with the imaging mode set by the imaging mode setting means.

9. An imaging apparatus as set forth in anyone of claims 1 to 8, wherein

the imaging apparatus can be switched between a plurality of lenses,

the imaging element is adapted to capture an object aberration image passed through at least one lens of the plurality of lenses and the optical wavefront modulation element and further includes

a conversion coefficient acquiring means for acquiring a conversion coefficient in accordance with the above one lens, and

the converting means (150, 190) is adapted to convert the image signal according to the conversion coefficient obtained from the conversion coefficient acquiring means.

10. An imaging apparatus as set forth in anyone of claims 1 to 9, wherein

the apparatus includes an exposure controlling means for controlling the exposure, and

the signal processing portion (140) is adapted to perform filter processing with respect to an optical transfer function (OTF) in accordance with the exposure information from the exposure controlling means.

11. An image processing method comprising:

a first step of capturing a diffused image of an object passed through at least an optical system (110) converting light beams and an optical wavefront modulation element (113) diffusing the light beams, and

a second step of generating a diffusion-free image signal by performing a restoration processing with respect to a diffused image signal obtained at the first step, **characterized in that**

in the second step (140), a focused image of an object region including a main object is extracted from the diffused image and the restoration processing is performed for only the focused image, wherein an unfocused image of a background region as the outside region of the object region from the diffused image is extracted, and

in a third step, the restored focused image of the object region and the unfocused image of the background region are combined (150, 190) to form a new image.

12. An image processing method as set forth in claim 11, wherein the third step includes

a fourth step of recording a blurred image before the restoration processing according to the second step, a focused image after the restoration processing, and/or a new image obtained by combining the blurred image after the restoration processing and the focused image,

a fifth step of displaying the image recorded at the fourth step or the image for recording in a display portion (170), and

a sixth step of setting a range in the display portion (170) and/or selecting a blurred image, and

the third step generates a focused image in the set range or out of the set range in the display portion (170) according to the sixth step and combines it with a blurred image to generate a new image and/or combines one or more blurred images selected according to the sixth step and the focused image to generate a new image.

13. An image processing method as set forth in claim 11, wherein the third step includes

a fourth step of recording a blurred image before the restoration processing according to the second step, a focused image after the restoration processing, or an intermediate image after the restoration processing and/or a new image obtained by combining the blurred image, focused image, or intermediate image,

a fifth step of displaying the image recorded at the fourth step or the image for recording in a display portion (170), and

a sixth step of setting a range in the display portion (170) and/or selecting a blurred image, and

the third step generates a focused image in the set range or out of the set range in the display portion (170) according to the sixth step and combines a range other than for generation of the focused image with the blurred image or intermediate image to generate a new image and/or combines one or more blurred images selected by a operation portion (180) or the intermediate image with the focused image to generate a new image.

**Patentansprüche**

1. Abbildungssystem, das aufweist:

ein optisches System (110) zum Umwandeln von Lichtstrahlen,
ein optisches Wellenfrontmodulationselement (113) zum Zerstreuen der Lichtstrahlen,
ein Abbildungselement (120), das ein zerstreutes Bild eines Objektes einfängt, das das wenigstens eine optische System (110) und das optische
Wellenfrontmodulationselement (113) durchlaufen hat, und
einen Signalverarbeitungsabschnitt (140), der eine Umwandlungseinrichtung zum Erzeugen eines zerstreuungsfreien Bildsignals durch Durchführen einer Wiederherstellungsverarbeitung in Bezug auf ein zerstreutes Bildsignal von dem Abbildungselement (120) umfasst,
**dadurch gekennzeichnet, dass**
der Signalverarbeitungsabschnitt (140) geeignet ist, ein fokussiertes Bild eines Objektbereichs einschließlich eines Hauptobjekts aus dem zerstreuten Bild abzuleiten, um die Wiederherstellungsverarbeitung nur für das fokussierte Bild durchzuführen, und geeignet ist, ein nicht fokussiertes Bild eines Hintergrundbereichs als den Bereich außerhalb des Objektbereichs aus dem zerstreuten Bild zu extrahieren, und
die Abbildungsvorrichtung ferner eine Erzeugungseinrichtung (150, 190) aufweist, die geeignet ist, das wiederhergestellte fokussierte Bild des Objektbereichs und das nicht fokussierte Bild des Hintergrundbereichs zu kombinieren, um ein neues Bild zu bilden.

2. Abbildungsvorrichtung, wie in Anspruch 1 dargelegt, die ferner aufweist:

einen Aufzeichnungsabschnitt zum Aufzeichnen eines Bilds vor der Wiederherstellungsverarbeitung durch den Signalverarbeitungsabschnitt (140), eines Bilds nach der Wiederherstellungsverarbeitung und eines kombinierten neuen Bilds.

3. Abbildungsvorrichtung, wie in Anspruch 1 dargelegt, die ferner aufweist:

einen Aufzeichnungsabschnitt zum Aufzeichnen eines verwischten Bilds vor der Wiederherstellungsverarbeitung durch den Signalverarbeitungsabschnitt (140), eines fokussierten Bilds nach der Wiederherstellungsverarbeitung und/oder eines neuen Bilds, das erhalten wird, indem das verwischte Bild vor der Wiederherstellungsverarbeitung und das fokussierte Bild nach der Wiederherstellungsverarbeitung kombiniert werden,
einen Anzeigeabschnitt (170) zum Anzeigen des in dem Aufzeichnungsabschnitt aufgezeichneten Bilds oder eines Bilds zum Aufzeichnen, und
einen Bedienabschnitt (180) zum Festlegen eines Bereichs in dem Anzeigeabschnitt (170) und/oder Auswählen des verwischten Bilds, und wobei die Erzeugungseinrichtung (150, 190) geeignet ist, durch den Funktionsabschnitt (180) ein fokussiertes Bild in dem festgelegten Bereich oder außerhalb des festgelegten Bereichs in dem Anzeigeabschnitt (180) zu erzeugen, um dieses mit dem verwischten Bild zu kombinieren, um ein neues Bild zu erzeugen und/oder eines oder mehrere der verwischten Bilder, die von dem Bedienabschnitt (170) ausgewählt werden, mit dem fokussierten Bild zu kombinieren, um das neue Bild zu erzeugen.

4. Abbildungsvorrichtung, wie in Anspruch 1 oder 2 dargelegt, die ferner aufweist:

einen Aufzeichnungsabschnitt zum Aufzeichnen eines verwischten Bilds vor der Wiederherstellungsverarbeitung durch den Signalverarbeitungsabschnitt (140), eines fokussierten Bilds nach der Wiederherstellungsverarbeitung oder eines Zwischenbilds nach der Wiederherstellungsverarbeitung und/oder eines neuen Bilds, das durch Kombinieren der verwischten Bilder, des fokussierten Bilds oder Zwischenbilds erhalten wird,
einen Anzeigeabschnitt (170) zum Anzeigen eines in dem Aufzeichnungsabschnitt aufgezeichneten Bilds oder eines Bilds zum Aufzeichnen, und
einen Funktionsabschnitt (180) zum Festlegen eines Bereichs in dem Anzeigeabschnitt (170) zum Festlegen eines Bereichs in dem Anzeigeabschnitt (170) und/oder Auswählen eines verwischten Bilds, und
wobei die Erzeugungseinrichtung (150, 190) geeignet ist, durch den Funktionsabschnitt (180) ein fokussiertes Bild in dem festgelegten Bereich oder außerhalb des festgelegten Bereichs in dem Anzeigeabschnitt (170) zu erzeugen, um einen anderen Bereich als den für die Erzeugung des fokussierten Bilds mit dem verwischten Bild oder dem Zwischenbild zu kombinieren, um ein neues Bild zu erzeugen und/oder eines oder mehrere der verwischten Bilder, die von dem Funktionsabschnitt (180) ausgewählt werden, oder das Zwischenbild mit dem fokussierten Bild zu kombinieren, um das neue Bild zu erzeugen.

5. Abbildungsvorrichtung, wie in einem der Ansprüche 1 bis 4 dargelegt, wobei:

das optische System (110) ein optisches Zoomsystem aufweist und eine Zoominformationserzeugungseinrichtung (500) zum Erzeugen von Informationen, die einer Zoomposition oder Zoomgröße des optischen Zoomsystems entsprechen, und
die Umwandlungseinrichtung (150, 190) geeignet ist, basierend auf Informationen, die von der Zoominformationserzeugungseinrichtung (500) erzeugt werden, ein zerstreuungsfreies Bildsignal aus dem zerstreuten Bildsignal zu erzeugen.

6. Abbildungsvorrichtung, wie in einem der Ansprüche 1 bis 4 dargelegt, wobei:

die Vorrichtung eine Objektabstandsinformationserzeugungseinrichtung (400) zum Erzeugen von Informationen, die einem Abstand bis zu dem Objekt entsprechen, umfasst, und
die Umwandlungseinrichtung (150, 190) geeignet ist, basierend auf den Informationen, die von der Objektabstandsinformationserzeugungseinrichtung (400) erzeugt werden, ein zerstreuungsfreies Bildsignal aus dem zerstreuten Bildsignal zu erzeugen.

7. Abbildungsvorrichtung, wie in einem der Ansprüche 1 bis 4 dargelegt, wobei die Vorrichtung umfasst:

eine Objektabstandsinformationserzeugungseinrichtung (400) zum Erzeugen von Informationen, die einem Abstand bis zu dem Objekt entsprechen, und
eine Umwandlungskoeffizienten-Funktionseinrichtung zum Durchführen einer Funktion, um basierend auf den Informationen, die von der Objektabstandsinformationserzeugungseinrichtung (400) erzeugt werden, einen Umwandlungskoeffizienten zu erhalten, und
wobei die Umwandlungseinrichtung (150, 190) geeignet ist, das Bildsignal gemäß dem Umwandlungskoeffizienten, der von der Umwandlungskoeffizienten-Funktionseinrichtung erhalten wird, umzuwandeln und ein zerstreuungsfreies Bildsignal zu erzeugen.

8. Abbildungsvorrichtung, wie in einem der Ansprüche 1 bis 7 dargelegt, wobei die Vorrichtung umfasst:

eine Abbildungsbetriebsart-Festlegungseinrichtung zum Festlegen der Abbildungsbetriebsart des Objekts, das fotografiert werden soll, und
wobei die Umwandlungseinrichtung (150, 190) geeignet ist, gemäß der durch die Abbildungsbetriebsart-Festlegungseinrichtung festgelegten Abbildungsbetriebsart verschiedene Umwandlungsverarbeitungen durchzuführen.

9. Abbildungsvorrichtung, wie in einem der Ansprüche 1 bis 8 dargelegt, wobei:

die Abbildungsvorrichtung zwischen mehreren Linsen umgeschaltet werden kann,
das Abbildungselement geeignet ist, ein Objektabbildungsfehlerbild, das wenigstens eine Linse der mehreren Linsen und das optische Wellenfrontmodulationselement durchlaufen hat, einzufangen, und ferner umfasst
eine Umwandlungskoeffizientenerfassungseinrichtung zum Erfassen eines Umwandlungskoeffizienten gemäß der vorstehenden einen Linse, und

die Umwandlungseinrichtung (150, 190) geeignet ist, das Bildsignal gemäß dem Umwandlungskoeffizienten, der von der Umwandlungskoeffizientenerfassungseinrichtung erhalten wird, umzuwandeln.

10.  Abbildungsvorrichtung, wie in einem der Ansprüche 1 bis 9 dargelegt, wobei:

die Vorrichtung eine Belichtungssteuerungseinrichtung zum Steuern der Belichtung umfasst, und

der Signalverarbeitungsabschnitt (140) geeignet ist, die Filterverarbeitung in Bezug auf eine optische Übertragungsfunktion (OTF) gemäß den Belichtungsinformationen von der Belichtungssteuerungseinrichtung durchzuführen.

11.  Bildverarbeitungsverfahren, das aufweist:

einen ersten Schritt zum Einfangen eines zerstreuten Bilds eines Objekts, das wenigstens ein optisches System (110), das Lichtstrahlen umwandelt, und ein optisches Wellenfrontmodulationselement (113), das die Lichtstrahlen zerstreut, durchlaufen hat, und

einen zweiten Schritt zum Erzeugen eines zerstreuungsfreien Bildsignals durch Durchführen einer Wiederherstellungsverarbeitung in Bezug auf ein in dem ersten Schritt erhaltenes zerstreutes Bildsignal,

**dadurch gekennzeichnet, dass**

in dem zweiten Schritt (140) ein fokussiertes Bild eines Objektbereichs einschließlich eines Hauptobjekts aus dem zerstreuten Bilds extrahiert wird, und die Wiederherstellungsverarbeitung nur für das fokussierte Bild durchgeführt wird, wobei ein nicht fokussiertes Bild eines Hintergrundbereichs als der Bereich außerhalb des Objektbereichs aus dem zerstreuten Bild extrahiert wird, und

in einem dritten Schritt das wiederhergestellte fokussierte Bild des Objektbereichs und das nicht fokussierte Bild des Hintergrundbereichs kombiniert werden (150, 190), um ein neues Bild zu bilden.

12.  Abbildungsverfahren, wie in Anspruch 11 dargelegt, wobei der dritte Schritt aufweist:

einen vierten Schritt zum Aufzeichnen eines verwischten Bilds vor der Wiederherstellungsverarbeitung gemäß dem zweiten Schritt, eines fokussierten Bilds nach der Wiederherstellungsverarbeitung und/oder eines neuen Bilds, das durch Kombinieren des verwischten Bilds nach der Wiederherstellungsverarbeitung und des fokussierten Bilds erhalten wird,

einen fünften Schritt zum Anzeigen des in dem vierten Schritt aufgezeichneten Bilds oder des Bilds zum Aufzeichnen in einem Anzeigeabschnitt (170), und

einen sechsten Schritt zum Festlegen eines Bereichs in dem Anzeigeabschnitt (170) und/oder Auswählen eines verwischten Bilds, und

wobei der dritte Schritt ein fokussiertes Bild in dem festgelegten Bereich oder außerhalb des festgelegten Bereichs in dem Anzeigeabschnitt (170) gemäß dem sechsten Schritt erzeugt und es mit einem verwischten Bild kombiniert, um ein neues Bild zu erzeugen und/oder eines oder mehrere verwischte Bilder, die gemäß dem sechsten Schritt ausgewählt werden, und das fokussierte Bild zu kombiniert, um das neue Bild zu erzeugen.

13.  Bildverarbeitungsverfahren, wie in Anspruch 11 dargelegt, wobei der dritte Schritt umfasst:

einen vierten Schritt zum Aufzeichnen eines verwischten Bilds vor der Wiederherstellungsverarbeitung gemäß dem zweiten Schritt, eines fokussierten Bilds nach der Wiederherstellungsverarbeitung oder eines Zwischenbilds nach der Wiederherstellungsverarbeitung und/oder eines neuen Bilds, das durch Kombinieren des verwischten Bilds, des fokussierten Bilds oder Zwischenbilds erhalten wird, und

einen fünften Schritt zum Anzeigen des in dem vierten Schritt aufgezeichneten Bilds oder des Bilds zum Aufzeichnen in einem Anzeigeabschnitt (170), und

einen sechsten Schritt zum Festlegen eines Bereichs in dem Anzeigeabschnitt (170) und/oder Auswählen eines verwischten Bilds, und

wobei der dritte Schritt ein fokussiertes Bild in dem festgelegten Bereich oder außerhalb des festgelegten Bereichs in dem Anzeigeabschnitt (170) gemäß dem sechsten Schritt erzeugt und einen anderen Bereich als den für die Erzeugung des fokussierten Bilds mit dem verwischten Bild oder dem Zwischenbild kombiniert, um ein neues Bild zu erzeugen und/oder eines oder mehrere der verwischten Bilder, die von einem Bedienabschnitt (180) ausgewählt werden, oder das Zwischenbild mit dem fokussierten Bild kombiniert, um das neue Bild zu erzeugen.

**Revendications**

1.  Appareil d'imagerie, comprenant :

un système optique (110) pour convertir des faisceaux lumineux,

un élément de modulation de front d'onde optique (113) pour diffuser les faisceaux lumineux, un élément d'imagerie (120) capturant une image diffusée d'un objet passant à travers au moins le système optique (110) et l'élément de modulation de front d'onde optique (113), et une portion de traitement de signal (140) comprenant un moyen de conversion pour générer un signal d'image libre de diffusion en réalisant un processus de restauration par rapport à un signal d'image diffusé depuis l'élément d'imagerie (120), **caractérisé en ce que**

la portion de traitement de signal (140) est adaptée pour extraire de l'image diffusée une image focalisée d'une région d'objet comprenant un objet principal, afin de réaliser le processus de restauration pour uniquement l'image focalisée et est adaptée pour extraire de l'image diffusée une image non focalisée d'une région d'arrière-plan en tant que la région extérieure de la région d'objet, et

l'appareil d'imagerie comprend en outre un moyen générateur (150, 190) adapté pour combiner l'image focalisée restaurée de la région d'objet et l'image non focalisée de la région d'arrière-plan afin de former une nouvelle image.

2. Appareil d'imagerie selon la revendication 1, comprenant en outre :

une portion d'enregistrement pour enregistrer une image avant le processus de restauration par la portion de traitement de signal (140), une image après le processus de restauration et une nouvelle image combinée.

3. Appareil d'imagerie selon la revendication 1 ou 2, comprenant en outre :

une portion d'enregistrement pour enregistrer une image floue avant le processus de restauration par la portion de traitement de signal (140), une image focalisée après le processus de restauration, et/ou une nouvelle image obtenue en combinant l'image floue avant le traitement de restauration et l'image focalisée après le traitement de restauration, une portion d'affichage (170) pour afficher l'image enregistrée dans la portion d'enregistrement ou une image à enregistrer, et une portion d'exploitation (180) pour déterminer une plage dans la portion d'affichage (170) et/ou sélectionner l'image floue, et le moyen générateur (150, 190) est adapté pour générer une image focalisée dans la plage déterminée ou hors de la plage déterminée dans la portion d'affichage (170) par la portion d'exploitation (180) pour combiner cette dernière à l'image floue afin de générer une nouvelle image et/ou de combiner une ou plusieurs des images floues sélectionnées par la portion d'exploitation (170) à l'image focalisée afin de générer ladite nouvelle image.

4. Appareil d'imagerie selon la revendication 1 ou 2, comprenant en outre :

une portion d'enregistrement pour enregistrer une image floue avant le traitement de restauration par la portion de traitement de signal (140), une image focalisée après le traitement de restauration, ou une image intermédiaire après le traitement de restauration, et/ou une nouvelle image obtenue en combinant les images floues, l'image focalisée ou l'image intermédiaire,

une portion d'affichage (170) pour afficher une image enregistrée dans la portion d'enregistrement ou une image à enregistrer, et

une portion d'exploitation (180) pour déterminer une plage dans la portion d'affichage (170) et/ou sélectionner une image floue, et

le moyen générateur (150, 190) est adapté pour générer une image focalisée dans la plage déterminée ou hors de la plage prédéterminée dans la portion d'affichage (170) par la portion d'exploitation (180), pour combiner une plage autre que pour la génération de l'image focalisée avec l'image floue ou l'image intermédiaire afin de générer une nouvelle image et/ou de combiner une ou plusieurs des images floues choisies par la portion d'exploitation (180) ou l'image intermédiaire avec l'image focalisée afin de générer ladite nouvelle image.

5. Appareil d'imagerie selon l'une quelconque des revendications 1 à 4, dans lequel le système optique (110) comprend un système optique de zoom et a un moyen générateur d'informations de zoom (500) pour générer des informations correspondant à une position de zoom ou une quantité de zoom du système optique de zoom, et le moyen de conversion (150, 190) est adapté pour générer un signal d'image libre de diffusion à partir du signal d'image diffusé en se basant sur les informations générées par le moyen générateur d'informations de zoom (500).

6. Appareil d'imagerie selon l'une quelconque des revendications 1 à 4, dans lequel l'appareil comprend un moyen générateur d'informations de distance d'objet (400) pour générer des informations correspondant à une distance jusqu'à l'objet, et

le moyen de conversion (150, 190) est adapté pour générer un signal d'image libre de diffusion à partir du signal d'image diffusé en se basant sur les informations générées par le moyen générateur d'informations de distance d'objet (400).

7. Appareil d'imagerie selon l'une quelconque des revendications 1 à 4, dans lequel l'appareil comprend un moyen générateur d'informations de distance d'objet (400) pour générer des informations correspondant à la distance jusqu'à l'objet, et un moyen d'exploitation de coefficient de conversion pour réaliser une opération permettant d'obtenir un coefficient de conversion en se basant sur les informations générées par le moyen générateur d'informations de distance d'objet (400), et le moyen de conversion (150, 190) est adapté pour convertir le signal d'image selon le coefficient de conversion obtenu par le moyen d'exploitation de coefficient de conversion et générer un signal d'image libre de diffusion.

8. Appareil d'imagerie selon l'une quelconque des revendications 1 à 7, dans lequel l'appareil comprend un moyen de détermination de mode d'imagerie pour déterminer le mode d'imagerie de l'objet à photographier, et le moyen de conversion (150, 190) est adapté pour réaliser un traitement de conversion différent en conformité avec le mode d'imagerie déterminé par le moyen de détermination de mode d'imagerie.

9. Appareil d'imagerie selon l'une quelconque des revendications 1 à 8, dans lequel l'appareil d'imagerie peut être commuté entre une pluralité de lentilles, l'élément d'imagerie est adapté pour capturer une image d'aberration d'objet passé à travers au moins une lentille de la pluralité de lentilles et l'élément de modulation de front d'onde optique et comprend en outre un moyen d'acquisition de coefficient de conversion pour acquérir un coefficient de conversion en conformité avec ladite lentille ci-dessus, et le moyen de conversion (150, 190) est adapté pour convertir le signal d'image selon le coefficient de conversion obtenu par le moyen d'acquisition de coefficient de conversion.

10. Appareil d'imagerie selon l'une quelconque des revendications 1 à 9, dans lequel l'appareil comprend un moyen de contrôle d'exposition pour contrôler l'exposition, et la portion de traitement de signal (140) est adaptée pour réaliser un traitement de filtrage par rapport à une fonction de transfert optique (FTO) en conformité avec les informations d'exposition en provenance du moyen de contrôle d'exposition.

11. Procédé de traitement d'image comprenant :

une première étape de capture d'une image diffusée d'un objet passé à travers au moins un système optique (110) convertissant les faisceaux lumineux et un élément de modulation de front d'onde optique (113) diffusant les faisceaux lumineux, et une deuxième étape de génération d'un signal d'image libre de diffusion en réalisant un traitement de restauration par rapport à un signal d'image diffusé obtenu à la première étape, **caractérisé en ce que** dans la deuxième étape (140), une image focalisée d'une région d'objet comprenant un objet principal est extraite de l'image diffusée et le traitement de restauration est réalisé pour uniquement l'image focalisée, dans laquelle une image non focalisée d'une région d'arrière-plan en tant que région extérieure de la région d'objet de l'image diffusée est extraite, et dans une troisième étape, l'image focalisée restaurée de la région d'objet et l'image non focalisée de la région d'arrière-plan sont combinées (150, 190) pour former une nouvelle image.

12. Procédé de traitement d'image selon la revendication 11, dans lequel la troisième étape comprend une quatrième étape d'enregistrement d'une image floue avant le processus de restauration selon la deuxième étape, d'une image focalisée après le traitement de restauration, et/ou d'une nouvelle image obtenue en combinant l'image floue après le processus de restauration et l'image focalisée, une cinquième étape d'affichage de l'image enregistrée à la quatrième étape ou de l'image à enregistrer dans une portion d'affichage (170), et une sixième étape de détermination d'une plage dans la portion d'affichage (170) et/ou de sélection d'une image floue, et la troisième étape génère une image focalisée dans la plage déterminée ou hors de la plage déterminée dans la portion d'affichage (170) selon la sixième étape et la combine avec une image floue afin de générer une nouvelle image et/ou combine une ou plusieurs images floues sélectionnées selon la sixième étape et l'image focalisée pour générer une nouvelle image.

13. Procédé de traitement d'image selon la revendication 11, dans lequel la troisième étape comprend :

une quatrième étape d'enregistrement d'une image floue avant le processus de restauration selon la deuxième étape, d'une image focalisée après le traitement de restauration, ou d'une image intermédiaire après le traitement de restauration et/ou d'une nouvelle image obtenue en combinant l'image floue, l'image focalisée ou l'image intermédiaire,

une cinquième étape d'affichage de l'image enregistrée à la quatrième étape ou de l'image à enregistrer dans une portion d'affichage (170), et

une sixième étape de détermination d'une plage dans la portion d'affichage (170) et/ou de sélection d'une image floue, et

la troisième étape génère une image focalisée dans la plage déterminée ou hors de la plage déterminée dans la portion d'affichage (170) selon la sixième étape et combine une plage autre que pour la génération de l'image focalisée avec l'image floue ou l'image intermédiaire afin de générer une nouvelle image et/ou combine une ou plusieurs images floues sélectionnées par une portion d'exploitation (180) ou l'image intermédiaire avec l'image focalisée afin de générer une nouvelle image.

# FIG. 1

STATE OF LIGHT BEAMS BY OPTICAL SYSTEM

BEST FOCUS

## SPOT IMAGES OF OPTICAL SYSTEM OF FIG. 1

FIELD( 0.000, 0.000)

**FIG. 2A**

Defocus=0.2mm

0.4000(mm)
Center of Gravity  (  0.0000,  0.0000)

FIELD( 0.000, 0.000)

**FIG. 2B**

Best focus

0.4000(mm)
Center of Gravity  (  0.0000,  0.0000)

FIELD( 0.000, 0.000)

**FIG. 2C**

Defocus=-0.2mm

0.4000(mm)
Center of Gravity  (  0.0000,  0.0000)

# FIG. 3

OBJECT

110

120 CCD

IMAGING ELEMENT

FIM

130 132 AFE

A/D CONVERTER

TIMING GENERATOR

131

100

140 IMAGE PROCESSING DEVICE

141 RAW BUFFER MEMORY

142 TWO-DIMENSIONAL CONVOLUTION OPERATION PORTION

144 CONVOLUTION CONTROL PORTION

143 KERNEL DATA STORAGE ROM

IMAGE DISPLAY MEMORY (VRAM) 160

150 CAMERA SIGNAL PROCESSING PORTION (DSP)

170 IMAGE MONITORING DEVICE

190 EXPOSURE CONTROL DEVICE

180 OPERATION PORTION

EP 1 954 030 B1

# FIG. 4

LIQUID CRYSTAL SCREEN

1802

1803

MENU

1801

# FIG. 5

# FIG. 6

170

# FIG. 7

170

# FIG. 8

# FIG. 9

FLT2 BLURRING USE FILTER : STRONG
FLT3 BLURRING USE FILTER : WEAK
NO FILTER PROCESSING
FLT1 RESTORATION
USE FILTER

# FIG. 10

START

ST1 — DISPLAY THROUGH IMAGE

ST2 — SHUTTER KEY DEPRESSED? — NO

YES

ST3 — CAPTURE IMAGE AND RECORD IT IN BUFFER

ST4 — RESTORATION PROCESS CENTER REGION OF IMAGE

ST5 — RECORD RESTORED IMAGE

END

# FIG. 11

START

ST11 — DISPLAY THROUGH IMAGE

ST12 — SHUTTER KEY DEPRESSED? — NO

YES

ST13 — CAPTURE IMAGE AND RECORD IT IN BUFFER

ST14 — MAKE USER SELECT OBJECT

ST15 — RESTORATION PROCESS SELECTED REGION

ST16 — RECORD RESTORED IMAGE

END

FIG. 12A

FIG. 12B

IMAGE PROCESSING RANGE (ENTIRE)

FIG. 12C

IMAGE PROCESSING RANGE
(ELLIPTICAL SHAPE)

FIG. 12D

IMAGE PROCESSING RANGE
(TRAPEZOIDAL SHAPE)

FIG. 12E

IMAGE PROCESSING RANGE(SQUARE SHAPE)

FIG. 13A

FIG. 13B

EP 1 954 030 B1

FIG. 14A

SELECT RANGE
▶DESIGNATION BY POINT
DESIGNATE SHAPE

FIG. 14B

DESIGNATION BY POINT
▶DESIGNATE POINT
EXECUTE PROCESSING

FIG. 14C

DESIGNATION BY POINT
DESIGNATE POINT
▶EXECUTE PROCESSING

FIG. 14D

35

# FIG. 15

<u>110</u>

EP 1 954 030 B1

# FIG. 16

# FIG. 17

113 PHASE PLATE

120 IMAGING ELEMENT

EP 1 954 030 B1

# FIG. 18

WIDE ANGLE SIDE

SPOT SIZE
40 μm

FOCAL POINT POSITION    -40 μm    -20 μm    0 μm    20 μm    40 μm

# FIG. 19

TELESCOPIC SIDE

SPOT SIZE
40 μm

FOCAL POINT POSITION    -40 μm    -20 μm    0 μm    20 μm    40 μm

# FIG. 20

EXAMPLE OF KERNEL DATA STORAGE ROM

| OPTICAL MAGNIFICATION | ×1.5 | ×5 | ×10 |
|---|---|---|---|
| KERNEL DATA | A | B | C |

$$A = \begin{pmatrix} a & b \\ c & d \end{pmatrix}$$

$$B = \begin{pmatrix} a' & b' & c' \\ d' & e' & f' \\ g' & h' & i' \end{pmatrix}$$

$$C = \begin{pmatrix} a' & b' & c' & d' \\ e' & f' & g' & h' \\ i' & j' & k' & l' \\ m' & n' & o' & p' \end{pmatrix}$$

# FIG. 21

```
        ┌─────────────────┐
        │      START      │
        └─────────────────┘
                 │
                 ▼
    ┌─────────────────────────┐
    │   DETECT  EXPOSURE      │ ～ ST1
    │   INFORMATION (RP)      │
    └─────────────────────────┘
                 │
                 ▼
    ┌─────────────────────────┐
    │  STORE  KERNEL  SIZE OF │
    │  RP = N  AND  NUMERICAL │ ～ ST2
    │  VALUE  OPERATION       │
    │  COEFFICIENT IN REGISTER│
    └─────────────────────────┘
                 │
                 ▼
  ┌───────────────────────────────┐
  │ CAPTURED  IMAGE  IS  PROCESSED │
  │  BASED  ON  DATA  STORED  IN   │ ～ ST3
  │  REGISTER  AND  TRANSFERRED    │
  │         TO  (DSP)              │
  └───────────────────────────────┘
```

# FIG. 22

EXPOSURE
INFORMATION
DETECTION  ~143etc.

FILTER SWITCH SIGNAL

110    120

OPTICAL SYSTEM    SENSOR

OPTICAL SYSTEM
AND SENSOR

IMAGE
SIGNAL

142

CONVOLUTION PROCESSING

SIGNAL PROCESSING PORTION

140

FIG. 23

EXPOSURE INFORMATION DETECTION ~143etc.

FILTER SWITCH SIGNAL

OPTICAL SYSTEM 110

SENSOR 120

OPTICAL SYSTEM AND SENSOR

IMAGE SIGNAL

140

NOISE REDUCTION FILTER PROCESSING 1 — ST31

COLOR CONVERSION PROCESSING — ST32

OTF RESTORATION FILTER PROCESSING — ST33

NOISE REDUCTION FILTER PROCESSING 2 — ST34

ST35

COLOR CONVERSION PROCESSING

SIGNAL PROCESSING PORTION

# FIG. 24

EP 1 954 030 B1

# FIG. 25

143etc.

EXPOSURE
INFORMATION
DETECTION

140

FILTER SWITCH SIGNAL

110   120

OPTICAL SYSTEM   SENSOR

OPTICAL SYSTEM
AND SENSOR

IMAGE
SIGNAL

NOISE REDUCTION
FILTER PROCESSING 1

ST51

COLOR CONVERSION
PROCESSING

ST52

OTF RESTORATION
FILTER PROCESSING

ST53

ST55

COLOR CONVERSION
PROCESSING

NOISE REDUCTION
FILTER PROCESSING 2

ST54

SIGNAL PROCESSING PORTION

EP 1 954 030 B1

# FIG. 26

EP 1 954 030 B1

# FIG. 27

LENS (INCLUDING PHASE PLATE) — 210

IMAGING ELEMENT — 220

RAW DATA

CONVOLUTION DEVICE — 301

RECOVERY DATA / S301

300A

EXPOSURE INFORMATION

IMAGE PROCESSING COMPUTATION PROCESSOR — 303

ZOOM INFORMATION DETECTION DEVICE — 500

KERNEL / NUMERICAL VALUE COMPUTATION COEFFICIENT STORAGE — 302

EP 1 954 030 B1

# FIG. 28

OBJECT
DISTANCE
INFORMATION

ZOOM INFORMATION

FILTER STRUCTURE

# FIG. 29

300B

EXPOSURE INFORMATION

303

210

LENS (INCLUDING PHASE PLATE)

220

IMAGING ELEMENT

RAW DATA

301

CONVOLUTION DEVICE

RECOVERY DATA

S301

IMAGE PROCESSING COMPUTATION PROCESSOR

400

OBJECT APPROXIMATE DISTANCE INFORMATION DETECTION DEVICE

302

KERNEL / NUMERICAL VALUE COMPUTATION COEFFICIENT STORAGE

OPERATION SWITCH

701

700

EP 1 954 030 B1

FIG. 30A

FIELD(0.000, 0.000)

100.00

Defocus=0.2mm

FIG. 30B

FIELD(0.000, 0.000)

100.00

Best focus

FIG. 30C

FIELD(0.000, 0.000)

100.00

Defocus=-0.2mm

# FIG. 31A

FIELD(0.000, 0.000)

100.00

# FIG. 31B

TS 0.00, 0.00 MM

MODULUS
OF THE OTF

SPATIAL FREQUENCY IN CYCLES PER MILLIMETER

# FIG. 32

MTF

B

LIFT UP OF MTF

A

SPATIAL FREQUENCY

# FIG. 33

EDGE
EMPHASIS

SPATIAL FREQUENCY

FIG. 34

FIG. 35

# FIG. 36

# FIG. 37

100A

**OBJECT**

110A — OPTICAL SYSTEM 1 (OPTICAL MAGNIFICATION M1)
110-1

OPTICAL PHASE MODULATING MEANS

LENS

PLURALITY OF OPTICAL SYSTEM APPARATUSES

110-2 — OPTICAL SYSTEM 2 (OPTICAL MAGNIFICATION M2)

120 — CCD IMA-GING ELE-MENT

FIM

130 — AFE
132 — A/D CONVER-TER

131 — TIMING GENERATOR

140 — IMAGE PROCESS-ING DEVICE
141 — RAW BUFFER MEMORY
142 — TWO-DI-MENSIONAL CONVOLU-TION OPERATION PORTION
144 — CONVOLU-TION CONTROL PORTION
143 — KERNEL DATA STORAGE ROM

160 — IMAGE DISPLAY MEMORY (VRAM)

150 — CAMERA SIGNAL PROCESSING PORTION (DSP)

170 — IMAGE MONITORING DEVICE

200 — SYSTEM CONTROL DEVICE

201 — OPTICAL SYSTEM SWITCH CONTROL PORTION

180 — OPERATION PORTION

EP 1 954 030 B1

# FIG. 38

```
         ┌─────────────────────────┐
        (   SET UP OPTICAL SYSTEM   )
         └─────────────────────────┘
                      │
                      ▼
         ┌─┬───────────────────┬─┐
    ┌───▶│ │  CONFIRMATION OF  │ │ ─── ST61
    │    │ │  OPTICAL SYSTEM   │ │
    │    └─┴───────────────────┴─┘
    │                 │
    │                 ▼
    │    ┌─┬───────────────────┬─┐
    │    │ │   KERNEL  DATA    │ │ ─── ST62
    │    │ │       SET         │ │
    │    └─┴───────────────────┴─┘
    │                 │
    │      ┌──────────┤
    │      │          ▼
    │      │       ╱       ╲          ST63
    │      │     ╱  OPTICAL SYSTEM TO ╲
    │      │   ╱  BE  SWITCHED BY OPERATION ╲
    │    N └──┤      PORTION ?      ├──
    │          ╲                   ╱
    │            ╲               ╱
    │              ╲    Y      ╱
    │                  │
    │                  ▼
    │    ┌─┬───────────────────┬─┐
    │    │ │  SWITCH  OPTICAL  │ │ ─── ST64
    │    │ │      SYSTEM       │ │
    │    └─┴───────────────────┴─┘
    │                  │
    └──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P6021005 A
- US P6642504 B
- US P6525302 B
- US P6069738 A
- JP 2003235794 A
- JP 2004153497 A
- US 6525302 B2

**Non-patent literature cited in the description**

- **EDWARD R. DOWSKI, JR. ; ROBERT H. CORMACK ; SCOTT D. SARAMA.** *Wavefront Coding; jointly optimized optical and digital imaging systems*
- **EDWARD R. DOWSKI, JR. ; GREGORY E. JOHNSON.** *Wavefront Coding; A modern method of achieving high performance and/or low cost imaging systems*